# EUROPÄISCHE PATENTSCHRIFT

(11) **EP 1 908 813 B1**
(45) Veröffentlichungstag und Bekanntmachung des Hinweises auf die Patenterteilung: **03.11.2010**
(21) Anmeldenummer: 07017453.7
(22) Anmeldetag: 06.09.2007
(51) Int. Cl.: C09K 19/34, C09K 19/42

(54) **Flüssigkristallines Medium**
Liquid crystalline medium
Milieu cristallin liquide

(30) Priorität: 04.10.2006 DE 102006046906
(43) Veröffentlichungstag der Anmeldung: 09.04.2008
(60) Teilanmeldung: 10008826.9
(73) Patentinhaber: Merck Patent GmbH, 64293 Darmstadt (DE)
(72) Erfinder: Wittek, Michael, Dr., 64285 Darmstadt (DE); Lietzau, Lars, Dr., 64295 Darmstadt (DE)

(56) Entgegenhaltungen:
- EP-A- 1 813 662
- EP-A- 1 832 643
- WO-A-2005/017067
- WO-A-2005/081215
- WO-A-2005/123879
- DE-A1-102006 047 128
- DE-A1-102006 052 123
- US-A1- 2005 040 365
- US-A1- 2006 278 850

## Beschreibung

Die vorliegende Erfindung betrifft ein flüssigkristallines Medium (FK-Medium), dessen Verwendung für elektrooptische Zwecke und dieses Medium enthaltende Anzeigen, sowie neue FK-Verbindungen zur Verwendung in den FK-Medien und Anzeigen.

Flüssigkristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("supertwisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität und geringem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfemseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Neben Flüssigkristallanzeigen, die eine Hintergrundbeleuchtung verwenden, also transmissiv und gegebenenfalls transflektiv betrieben werden, sind besonders auch reflektive Flüssigkristallanzeigen interessant. Diese reflektiven Flüssigkristallanzeigen benutzen das Umgebungslicht zur Informationsdarstellung. Somit verbrauchen sie wesentlich weniger Energie als hintergrundbeleuchtete Flüssigkristallanzeigen mit entsprechender Größe und Auflösung. Da der TN-Effekt durch einen sehr guten Kontrast gekennzeichnet ist, sind derartige reflektive Anzeigen auch bei hellen Umgebungsverhältnissen noch gut abzulesen. Dies ist bereits von einfachen reflektiven TN-Anzeigen, wie sie in z. B. Armbanduhren und Taschenrechnern verwendet werden, bekannt. Jedoch ist das Prinzip auch auf hochwertige, höher auflösende Aktiv-Matrix angesteuerte Anzeigen wie z. B. TFT-Displays anwendbar. Hier ist wie bereits bei den allgemeinen üblichen transmissiven TFT-TN-Anzeigen die Verwendung von Flüssigkristallen mit niedriger Doppelbrechung (Δn) nötig, um eine geringe optische Verzögerung (d · Δn) zu erreichen. Diese geringe optische Verzögerung führt zu einer meist akzeptablen geringen Blickwinkelabhängigkeit des Kontrastes (vgl. DE 30 22 818). Bei reflektiven Anzeigen ist die Verwendung von Flüssigkristallen mit kleiner Doppelbrechung noch wichtiger als bei transmissiven Anzeigen, da bei reflektiven Anzeigen die effektive Schichtdicke, die das Licht durchquert, ungefähr doppelt so groß ist wie bei transmissiven Anzeigen mit derselben Schichtdicke.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- Schaltbarkeit bei extrem tiefen Temperaturen (out-door-use, Automobil, Avionik)
- erhöhte Beständigkeit gegenüber UV-Strahlung (längere Lebensdauer)
- kleine Schwellenspannung.

Mit den aus dem Stand der Technik zur Verfügung stehenden Medien, z.B. beschrieben in WO 2005/123879, US 2005/040365, WO 2005/017067, EP-A-1813662, EP 1832643 und WO 2005/081215, ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Insbesondere bei FK-Anzeigen in Geräten für mobile Anwendungen (z.B. Mobiltelefone, PDAs) ist eine deutliche Verringerung der Betriebsspannung gewünscht, um den Gesamtenergiebedarf des Gerätes zu senken. Hierzu ist eine deutliche Erhöhung der Polarität bzw. der dielektrischen Anisotropie der FK-Medien erforderlich. Gleichzeitig soll in den FK-Medien eine Verringerung des Klärpunkts und des spezifischen Widerstands sowie eine zu starke Erhöhung der Doppelbrechung vermieden werden. Es hat sich jedoch gezeigt, dass die Verwendung von FK-Verbindungen mit hoher Polarität in FK-Medien oft zu einer Erniedrigung des Klärpunkts und/oder einer Erhöhung der Doppelbrechung sowie zu einer Verringerung der Stabilität der Betriebsspannung bei Licht- und Temperaturbelastung führt.

Der Erfindung liegt die Aufgabe zugrunde, Medien insbesondere für derartige MFK-, TN- oder STN-Anzeigen bereitzustellen, die die oben angegebenen Nachteile nicht oder nur in geringerem Maße zeigen, und vorzugsweise eine sehr niedrige Schwellenspannung bei gleichzeitig hoher dielektrische Anisotropie, hohem Klärpunkt, großem spezifischen Widerstand sowie niedriger Doppelbrechung aufweisen.

Es wurde nun gefunden, dass diese Aufgabe gelöst werden kann, wenn man FK-Medien enthaltend eine oder mehrere Verbindungen der Formel I verwendet. Die Verbindungen der Formel I führen zu Mischungen mit den oben angegebenen gewünschten Eigenschaften.

Gegenstand der Erfindung ist ein flüssigkristallines Medium (FK-Medium), **dadurch gekennzeichnet, dass** es eine oder mehrere Verbindungen der Formel I 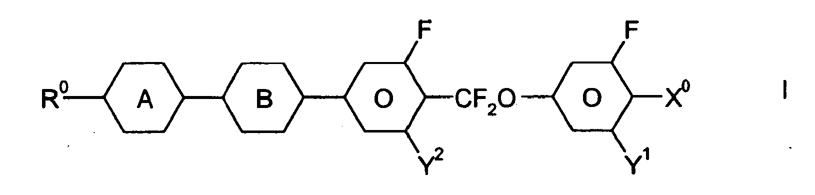 enthält, worin
- R⁰: einen halogenierten oder unsubstituierten Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 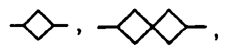 -O-, -CO-O- oder -O-CO- so ersetzt sein können, dass O-Atome nicht direkt miteinander verknüpft sind,
- X⁰: F, Cl, CN, SF₅, SCN, NCS, halogenierter Alkylrest, halogenierter Alkenylrest, halogenierter Alkoxyrest oder halogenierter Alkenyloxy- rest mit bis zu 6 C-Atomen, und
- Y^{1,2}: jeweils unabhängig voneinander H oder F, und 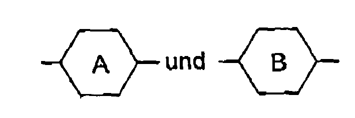
jeweils unabhängig voneinander 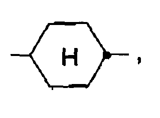 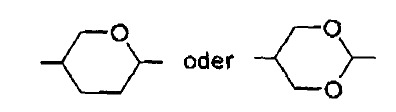 bedeuten, wobei mindestens einer der
Ringe 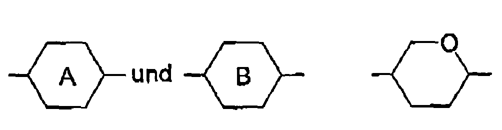 bedeuten,
und
eine oder mehrere Verbindungen ausgewählt aus folgenden Formeln enthält, 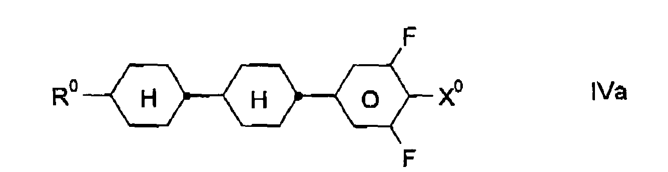 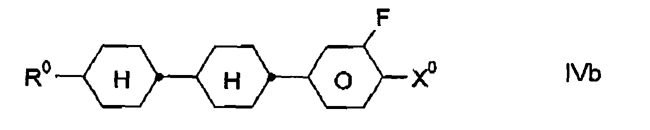 worin
- R⁰: einen halogenierten oder unsubstituierten Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 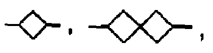 -O-, -CO-O- oder -O-CO- so ersetzt sein können, dass O-Atome nicht direkt miteinander verknüpft sind,
- X⁰: F, Cl, CN, SF₅, SCN, NCS, halogenierter Alkylrest, halogenierter Alkenylrest, halogenierter Alkoxyrest oder halogenierter Alkenyloxyrest mit bis zu 6 C-Atomen,
bedeuten,
und das Medium 2-30 Gew.% an Verbindungen der Formel IV enthält.

Gegenstand der Erfindung ist weiterhin die Verwendung von FK-Medien wie vor- und nachstehend beschrieben für elektrooptische Zwecke, insbesondere in FK-Anzeigen, vorzugsweise in MFK-, TN- und STN-Anzeigen.

Gegenstand der Erfindung ist weiterhin ein elektrooptische FK-Anzeige, insbesondere eine MFK-, TN- oder STN-Anzeige, enthaltend ein FK-Medium wie vor- und nachstehend beschrieben.

Gegenstand der Erfindung sind auch neue Verbindungen der Formel I, sowie ihre Verwendung in FK-Medien und FK-Anzeigen wie vor- und nachstehend beschrieben.

Die Verbindungen der Formel I besitzen einen relativ hohen Klärpunkt, eine hohe positive dielektrische Anisotropie, eine niedrige Doppelbrechung und einen breiten nematischen Phasenbereich. Überraschenderweise wurde gefunden, dass FK-Medien enthaltend Verbindungen der Formel I gleichzeitig eine hohe Polarität, eine sehr niedrige Schwellenspannung und einen hohen Klärpunkt aufweisen.

Weiterhin weisen die erfindungsgemäßen FK-Medien insbesondere folgende Vorteile auf
- hohe "Voltage Holding Ratio" (HR) nach Temperatur- und/oder Lichtbelastung,
- je nach gewünschter Anwendung eine niedrige bis sehr niedrige Doppelbrechung,
- je nach gewünschter Anwendung eine niedrige bis sehr niedrige Doppelbrechung,
- einen breiten nematischen Phasenbereich,
und sind deshalb besonders gut für FK-Anzeigen in mobilen Anwendungen geeignet.

Die Verbindungen der Formel I besitzen einen breiten Anwendungsbereich. In Abhängigkeit von der Auswahl der Substituenten können sie als Basismaterialien dienen, aus denen flüssigkristalline Medien zum überwiegenden Teil zusammengesetzt sind; es können aber auch den Verbindungen der Formel I flüssigkristalline Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren.

Die Verbindungen der Formel I sind in reinem Zustand farblos und bilden flüssigkristalline Mesophasen in einem für die elektrooptische Verwendung günstig gelegenen Temperaturbereich. Chemisch, thermisch und gegen Licht sind sie stabil.

Die Verbindungen der Formel I werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen. Die Verbindungen der Formel I können auch nach den in WO 2004/048501 A1 und WO 2006/125511 A1 beschriebenen Verfahren oder in Analogie dazu hergestellt werden.

Falls in den oben- und untenstehenden Formeln R⁰ einen Alkylrest und/oder einen Alkoxyrest bedeutet, so kann dieser geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradedoxy.

Oxaalkyl bedeutet vorzugsweise geradkettiges 2-Oxapropyl (= Methoxymethyl), 2-(= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, 2-, 3-, 4-, 5-, 6-, oder 7-Oxaoctyl, 2-, 3-, 4-, 5-, 6-, 7- oder 8-Oxanonyl, 2-, 3-, 4-, 5-, 6-, 7-, 8- oder 9-Oxadexyl.

Falls R⁰ einen Alkylrest bedeutet, in dem eine CH₂-Gruppe durch -CH=CH- ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls R⁰ einen mindestens einfach durch Halogen substituierten Alkyl- oder Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

In den oben- und untenstehenden Formeln ist X⁰ vorzugsweise F, Cl oder ein- oder mehrfach fluoriertes Alkyl oder Alkoxy mit 1, 2 oder 3 C-Atomen oder ein- oder mehrfach fluoriertes Alkenyl mit 2 oder 3 C-Atomen bedeutet. X⁰ ist besonders bevorzugt F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCCIFCF₂CF₃ oder CH=CF₂, ganz besonders bevorzugt F oder OCF₃.

Besonders bevorzugte Verbindungen der Formel I sind ausgewählt aus folgenden Unterformeln 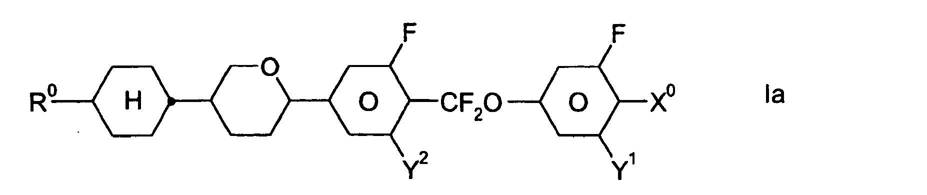 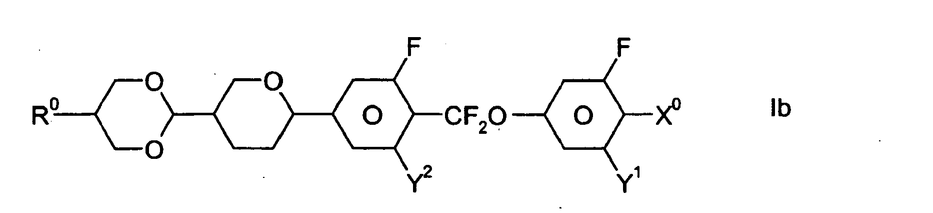 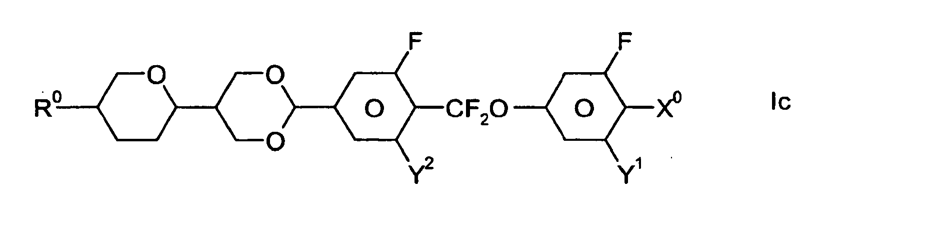 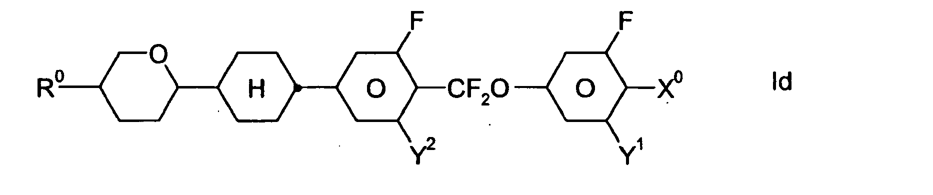 worin Y¹, Y², R⁰ und X⁰ die in Formel I angegebene Bedeutung haben. Vorzugsweise bedeutet R⁰ geradkettiges Alkyl mit 1 bis 8 C-Atomen, ferner Alkenyl mit 2 bis 7 C-Atomen.

Besonders bevorzugt sind Verbindungen der Formel Ia, Ib und Ic.

Besonders bevorzugte Verbindungen der Formeln I und Ia-Id sind solche, worin Y¹ F und Y² H oder F, vorzugsweise F, bedeutet. Weitere bevorzugte Verbindungen der Formeln I und Ia-Id sind solche, worin X⁰ F oder OCF₃, vorzugsweise F, bedeutet.

Weitere bevorzugte Ausführungsformen sind im Folgenden angegeben:
- Das Medium enthält zusätzlich eine oder mehrere Verbindungen der Formel II und/oder III: 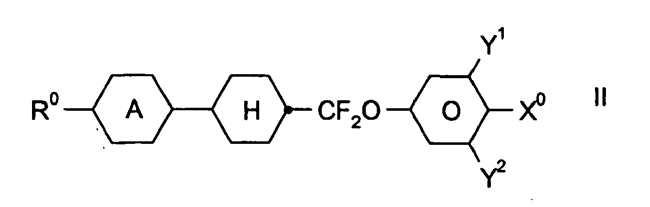 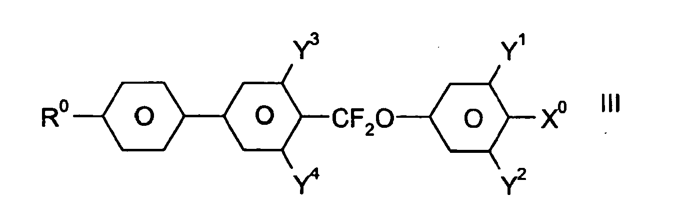 worin A, R⁰, X⁰, Y¹ und Y² die in Formel I angegebene Bedeutung besitzen und Y³ und Y⁴ H oder F bedeuten; 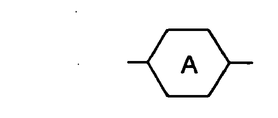 bedeutet vorzugsweise 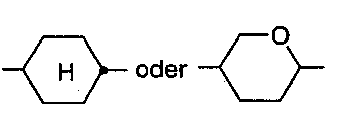
- Die Verbindungen der Formel II sind vorzugsweise ausgewählt aus folgenden Formeln: 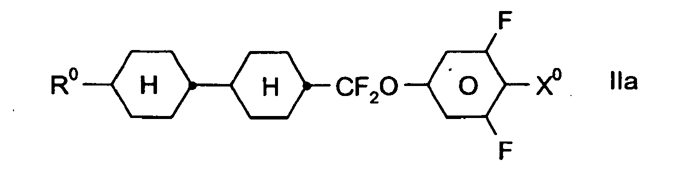 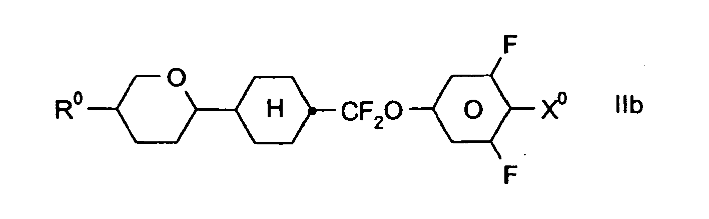 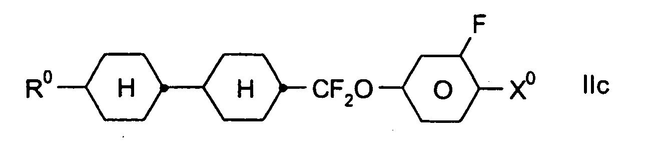 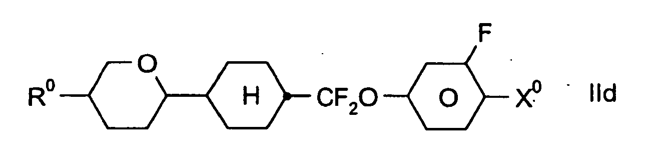 worin R⁰ und X⁰ die oben angegebenen Bedeutungen haben. Vorzugsweise bedeutet R⁰ Alkyl mit 1 bis 8 C-Atomen und X⁰ F. Besonders bevorzugt sind Verbindungen der Formel IIa und IIb;
- Die Verbindungen der Formel III sind vorzugsweise ausgewählt aus folgenden Formeln: 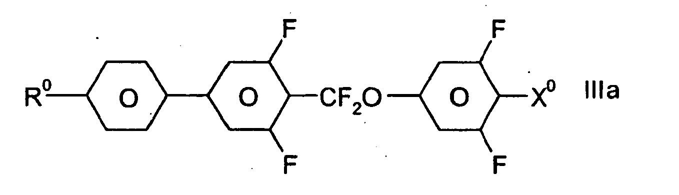 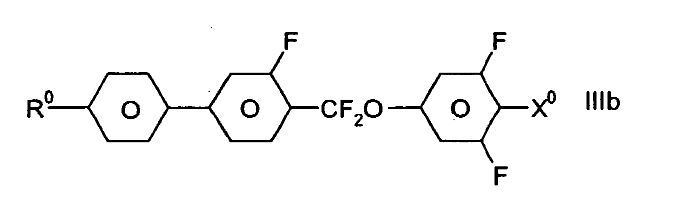 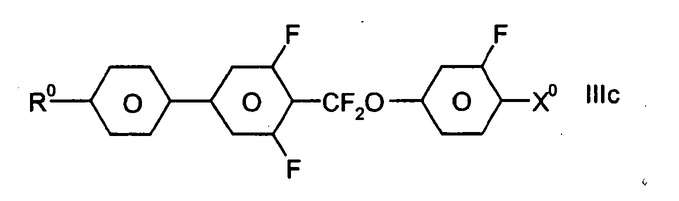 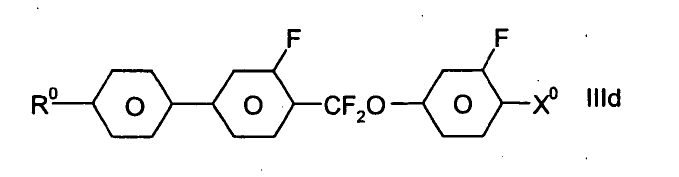 worin R⁰ und X⁰ die oben angegebenen Bedeutungen haben, Vorzugsweise bedeutet R⁰ Alkyl mit 1 bis 8 C-Atomen und X⁰ F. Besonders bevorzugt sind Verbindungen der Formel IIIa;
- Das Medium enthält zusätzlich eine oder mehrere Verbindungen ausgewählt aus folgenden Formeln: 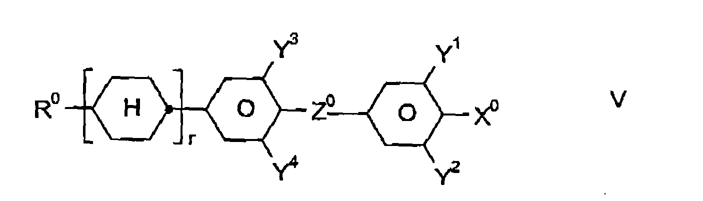 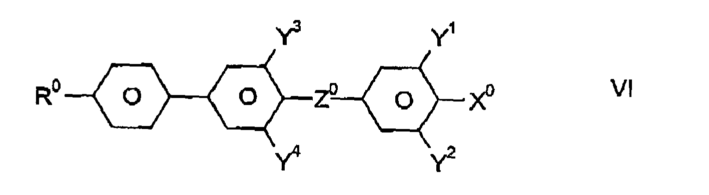 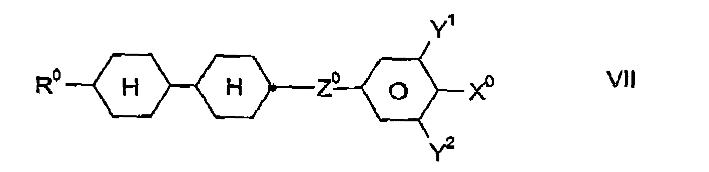 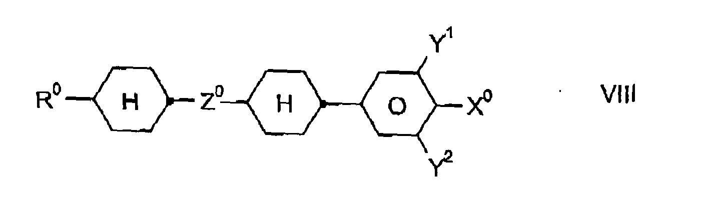 worin R⁰, X⁰ und Y¹⁻⁴ die in Formel II angegebenen Bedeutungen besitzen,
   - Z⁰: -C₂H₄-, -(CH₂)₄-, -CH=CH-, -CF=CF-, -C₂F₄-, -CH₂CF₂-, -CF₂CH₂-, -CH₂O-, -OCH₂-, -COO- oder -OCF₂-, in Formel V und VI auch eine Einfachbindung, in Formel V und VIII auch -CF₂O-, und
   - r: 0 oder 1 bedeutet;
- Die Verbindungen der Formel V sind vorzugsweise ausgewählt aus folgenden Formeln: 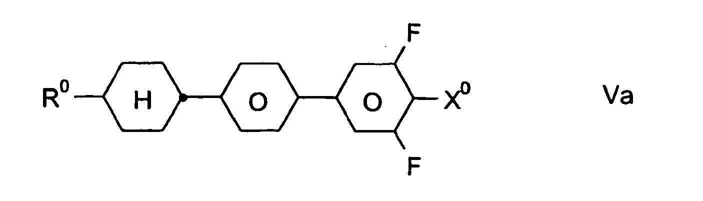 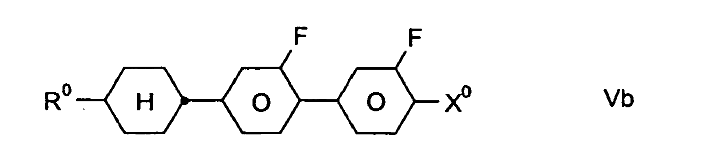 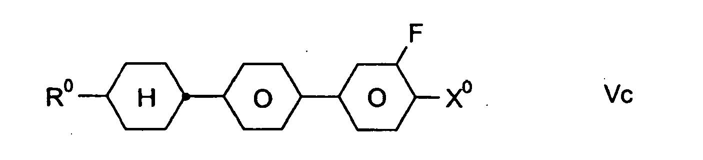 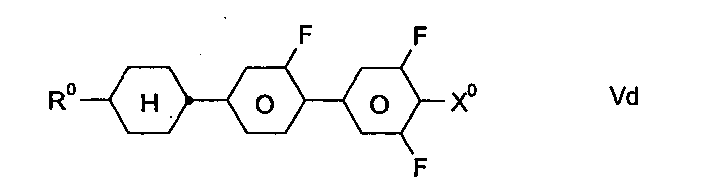 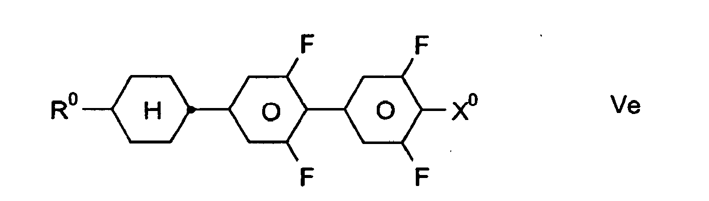 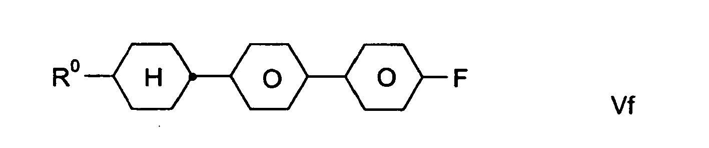 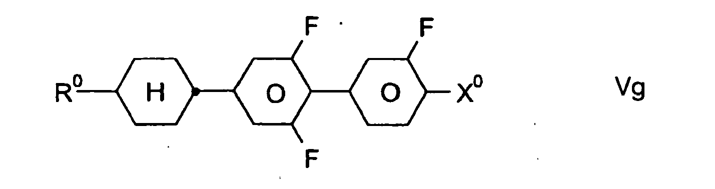 worin R⁰ und X⁰ die oben angegebenen Bedeutungen haben. Vorzugsweise bedeutet R⁰ Alkyl mit 1 bis 8 C-Atomen und X⁰ F;
- Die Verbindungen der Formel VII sind vorzugsweise ausgewählt aus folgenden Formeln: 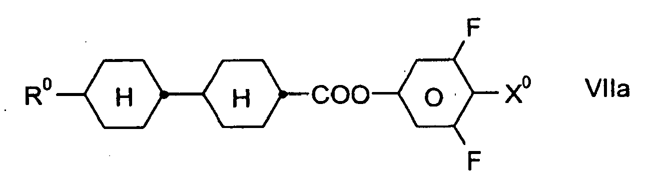 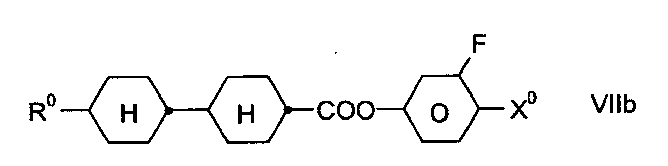 worin R⁰ und X⁰ die oben angegebenen Bedeutungen haben. Vorzugsweise bedeutet R⁰ Alkyl mit 1 bis 8 C-Atomen und X⁰ F;
- Das Medium enthält ein oder mehrere Verbindungen ausgewählt aus folgenden Formeln: 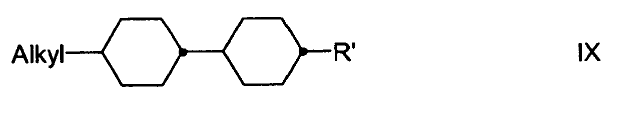 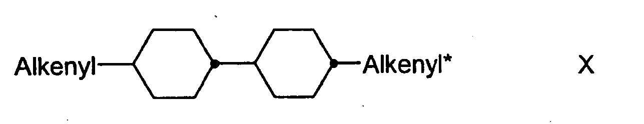 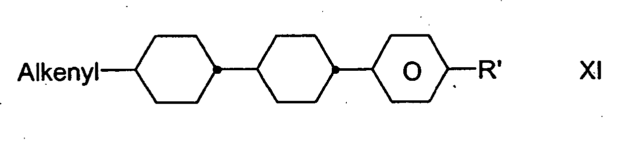 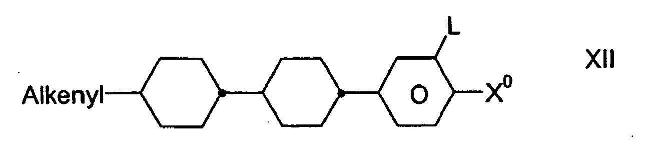 worin X⁰ die in Formel I angegebene Bedeutung besitzt und vorzugsweise F bedeutet,
   - L: H oder F,
   - "Alkyl": C₁₋₇-Alkyl,
   - R': C₁₋₇Alkyl, C₁₋₆-Alkoxy oder C₂₋₇-Alkenyl, und
   "Alkenyl" und "Alkenyl*" jeweils unabhängig voneinander C₂₋₇-Alkenyl bedeuten.
- Die Verbindungen der Formeln IX-XII sind vorzugsweise ausgewählt aus folgenden Formeln: 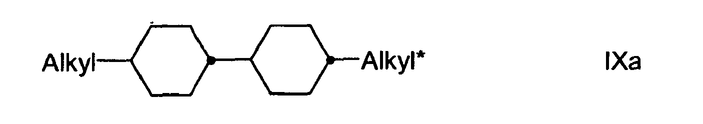 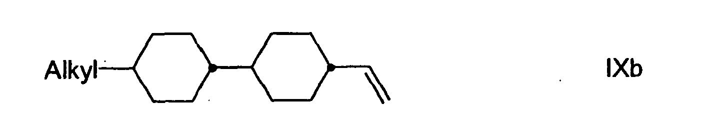 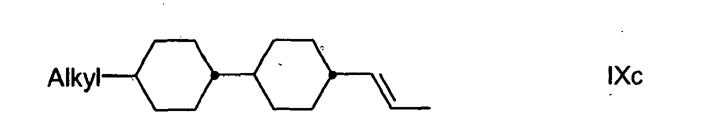 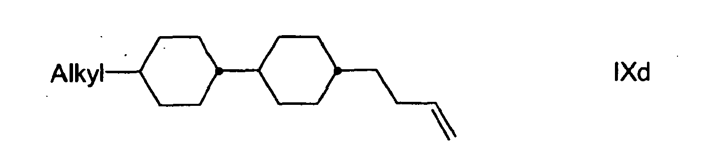 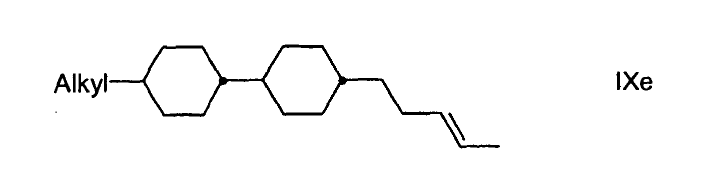 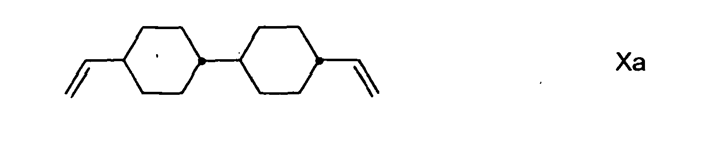 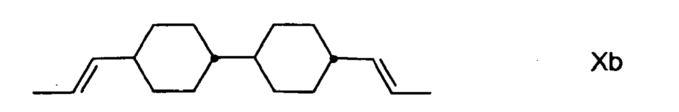 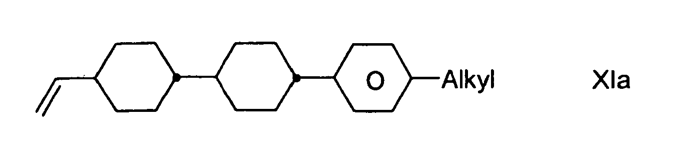 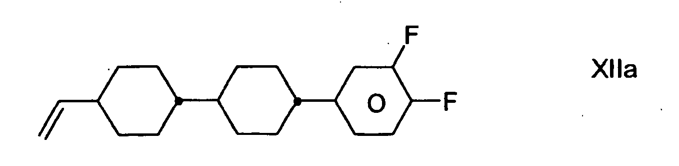 worin "Alkyl" und "Alkyl*" jeweils unabhängig voneinander C₁₋₇-Alkyl bedeuten;
- Das Medium enthält zusätzlich eine oder mehrere Verbindungen ausgewählt aus folgenden Formeln: 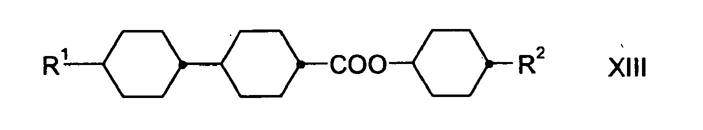 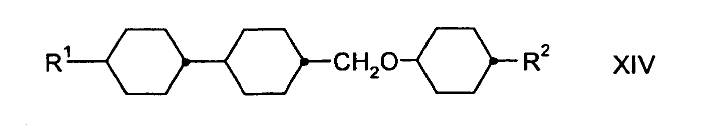 worin R¹ und R² jeweils unabhängig voneinander n-Alkyl, Alkoxy, Oxaalkyl, Fluoralkyl oder Alkenyl mit jeweils bis zu 9 C-Atomen bedeuten, und vorzugsweise jeweils unabhängig voneinander Alkyl mit 1 bis 8 C-Atomen bedeuten;
- Das Medium enthält zusätzlich eine oder mehrere Verbindungen der folgenden Formel: 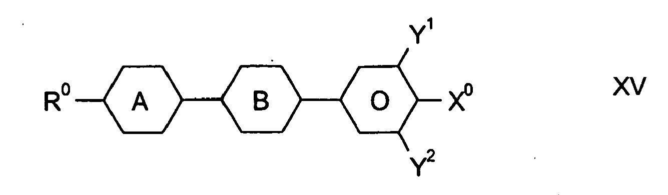 worin A, B, R⁰, X⁰ und Y^{1,2} die in Formel I angegebenen Bedeutungen besitzen, wobei A und B nicht gleichzeitig Cyclohexylen bedeuten;
- Die Verbindungen der Formel XV sind vorzugsweise ausgewählt aus folgenden Formeln: 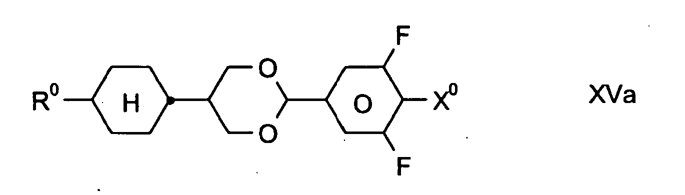 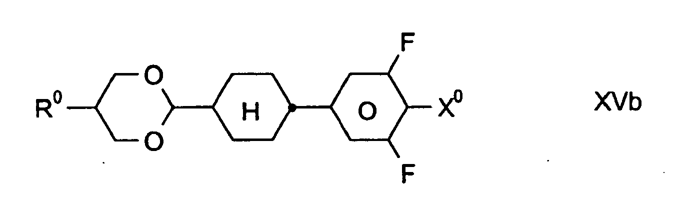 worin R⁰ und X⁰ die oben angegebenen Bedeutungen haben. Vorzugsweise bedeutet R⁰ Alkyl mit 1 bis 8 C-Atomen und X⁰ F;
- Das Medium enthält eine oder mehrere Verbindungen der folgenden Formel: 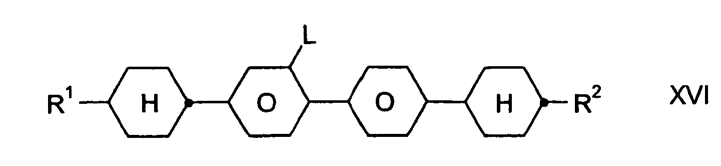 worin R¹ und R² die oben angegebene Bedeutung besitzen, und vorzugsweise jeweils unabhängig voneinander Alkyl mit 1 bis 8 C-Atomen bedeuten, und L H oder F bedeutet;
- Das Medium enthält zusätzlich eine oder mehrere Verbindungen ausgewählt aus folgenden Formeln: 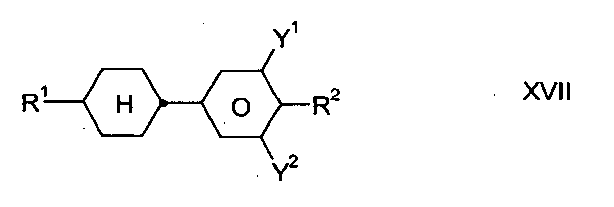 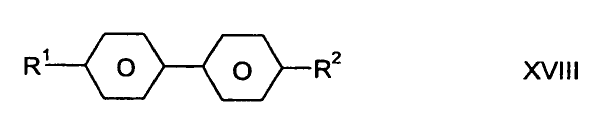 worin R^{1,2} und Y^{1,2} die oben angegebenen Bedeutungen haben;
- Das Medium enthält zusätzlich eine oder mehrere Verbindungen ausgewählt aus folgenden Formeln: 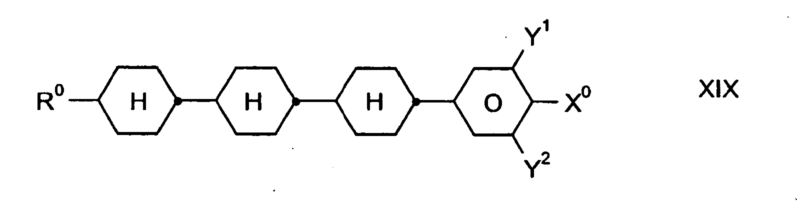 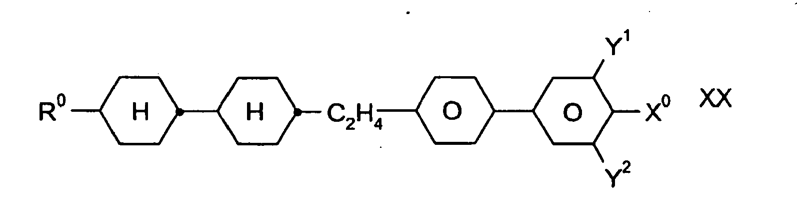 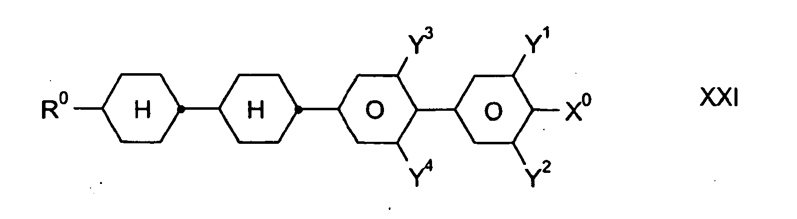 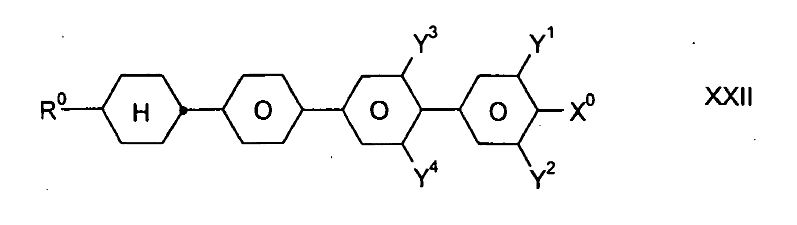 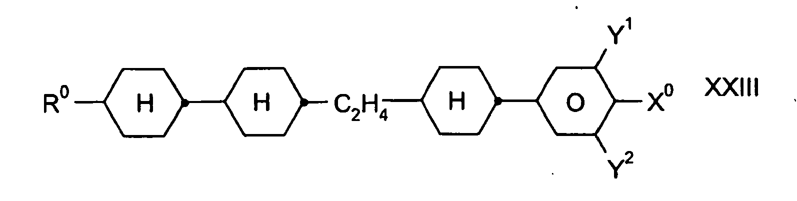 worin R⁰ und X⁰ jeweils unabhängig voneinander eine der oben angegebenen Bedeutungen haben und Y¹⁻¹² jeweils unabhängig voneinander H oder F bedeuten. X⁰ ist vorzugsweise F, Cl, CF₃, OCF₃ oder OCHF₂. R⁰ bedeutet vorzugsweise Alkyl, Alkoxy, Oxaalkyl, Fluoralkyl oder Alkenyl mit jeweils bis zu 8 C-Atomen. 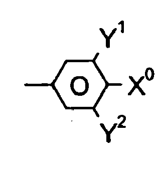 ist vorzugsweise 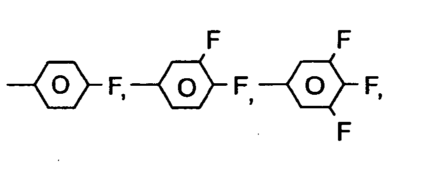 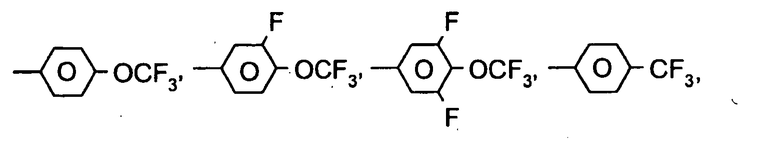 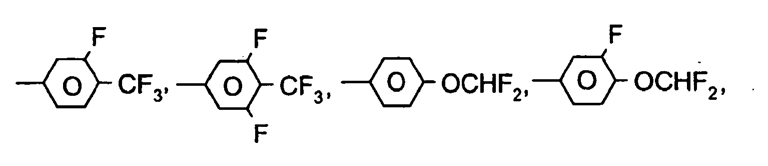 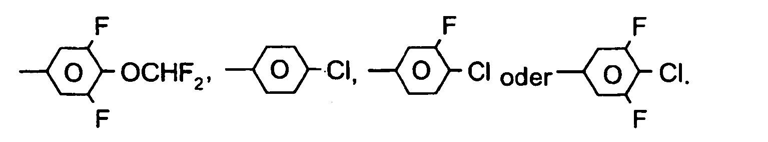
- R⁰ ist geradkettiges Alkyl oder Alkenyl mit 2 bis 7 C-Atomen;
- X⁰ ist F;
- Das Medium enthält eine, zwei oder mehr Verbindungen der Formel I, insbesondere der Formel Ia, Ib oder Ic;
- Das Medium enthält 2-40 Gew.%, bevorzugt 3-30 Gew.%, besonders bevorzugt 3-20 Gew.%, an Verbindungen der Formel I;
- Das Medium enthält Verbindungen ausgewählt aus den Formeln I, II, III, IV, IX-XII, XIII und XIV;
- Der Anteil an Verbindungen der Formeln II, III, IV, IX-XII, XIII und XIV im Gesamtgemisch beträgt 40 bis 95 Gew.%;
- Das Medium enthält 20-90 Gew.%, besonders bevorzugt 30-80 Gew.% an Verbindungen der Formel II;
- Das Medium enthält 5-60 Gew.%, besonders bevorzugt 10-50 Gew.% an Verbindungen der Formel IIa;
- Das Medium enthält 5-60 Gew.%, besonders bevorzugt 10-50 Gew.% an Verbindungen der Formel IIb;
- Das Medium enthält 2-30 Gew.%, besonders bevorzugt 2-20 Gew.% an Verbindungen der Formel III;
- Das Medium enthält 2-30 Gew.%, besonders bevorzugt 3-20 Gew.% an Verbindungen der Formeln IX-XII;
- Das Medium enthält 4-30 Gew.%, besonders bevorzugt 5-25 Gew.% an Verbindungen der Formel XIV.

Es wurde gefunden, dass bereits ein relativ geringer Anteil an Verbindungen der Formel I im Gemisch mit üblichen Flüssigkristallmaterialien, insbesondere jedoch mit einer oder mehreren Verbindungen der Formeln II bis XXIII zu einer beträchtlichen Erhöhung der Lichtstabilität und zu niedrigen Werten für die Doppelbrechung führt, wobei gleichzeitig breite nematische Phasen mit tiefen Übergangstemperaturen smektisch-nematisch beobachtet werden, wodurch die Lagerstabilität verbessert wird. Gleichzeitig zeigen die Mischungen sehr niedrige Schwellenspannungen und sehr gute Werte für die VHR bei UV-Belastung.

Der Ausdruck "Alkyl" bzw. "Alkyl*" umfasst geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 1-6 Kohlenstoffatomen sind im allgemeinen bevorzugt.

Der Ausdruck "Alkenyl" bzw. "Alkenyl*" umfasst geradkettige und verzweigte Alkenylgruppen mit 2-7 Kohlenstoffatomen, insbesondere die geradkettigen Gruppen. Bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele besonders bevorzugter Alkenylgruppen sind Vinyl, 1 E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors oder mehrfach fluorierte Alkylketten sind jedoch nicht ausgeschlossen.

Der Ausdruck "Oxaalkyl" bzw. "Alkoxy" umfasst vorzugsweise geradkettige Reste der Formel CₙH₂ₙ₊₁-O-(CH₂)ₘ, worin n und m jeweils unabhängig voneinander 1 bis 6 bedeuten. m kann auch 0 bedeuten. Vorzugsweise ist n = 1 und m = 1-6 oder m = 0 und n = 1-3.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1 E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten. Die erfindungsgemäßen Mischungen zeichnen sich insbesondere durch hohe K₁-Werte aus und besitzen somit deutlich schnellere Schaltzeilen als die Mischungen aus dem Stand der Technik.

Das optimale Mengenverhältnis der Verbindungen der oben genannten Formeln hängt weitgehend von den gewünschten Eigenschaften, von der Wahl der Komponenten der oben genannten Formeln und der Wahl weiterer gegebenenfalls vorhandener Komponenten ab.

Geeignete Mengenverhältnisse innerhalb des oben angegebenen Bereichs können von Fall zu Fall leicht ermittelt werden.

Die Gesamtmenge an Verbindungen der oben genannten Formeln in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die gewünschte Verbesserung der Eigenschaften der Mischung ist jedoch in der Regel umso größer je höher die Gesamtkonzentration an Verbindungen der oben genannten Formeln ist.

In einer besonders bevorzugten Ausführungsform enthalten die erfindungsgemäßen Medien Verbindungen der Formel II bis VIII (vorzugsweise II, III, IV und V, insbesondere IIa und IIIa), worin X⁰ F, OCF₃, OCHF₂, OCH=CF₂, OCF=CF₂ oder OCF₂-CF₂H bedeutet. Eine günstige synergistische Wirkung mit den Verbindungen der Formel I führt zu besonders vorteilhaften Eigenschaften. Insbesondere Mischungen enthaltend Verbindungen der Formeln I, IIa und IIIa zeichnen sich durch ihre niedrige Schwellenspannung aus.

Die einzelnen Verbindungen der oben genannten Formeln und deren Unterformeln, die in den erfindungsgemäßen Medien verwendet werden können, sind entweder bekannt, oder sie können analog zu den bekannten Verbindungen hergestellt werden.

Gegenstand der Erfindung sind auch elektrooptische Anzeigen, wie z. B. STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Viskosität bei tiefer Temperatur, thermischer und UV-Stabilität und hoher optischer Anisotropie übertreffen bei weitem bisherige Materialien aus dem Stand der Technik.

Die erfindungsgemäßen Mischungen sind insbesondere für mobile Anwendungen und low-Δn-TFT-Anwendungen, wie z. B. Mobiltelefone und PDAs geeignet.

Die erfindungsgemäßen Flüssigkristallmischungen ermöglichen es, bei Beibehaltung der nematischen Phase bis -20 °C und bevorzugt bis -30 °C, besonders bevorzugt bis -40 °C, und des Klärpunkts ≥ 70 °C, vorzugsweise ≥ 80 °C, besonders bevorzugt ≥ 85 °C, gleichzeitig dielektrische Anisotropiewerte Δε ≥ +10, vorzugsweise ≥ +12 und einen hohen Wert für den spezifischen Widerstand zu erreichen, wodurch hervorragende MFK-Anzeigen erzielt werden können. Insbesondere sind die Mischungen durch kleine Operationsspannungen gekennzeichnet.

Die Schwellenspannung der erfindungsgemäßen Flüssigkristallmischungen ist vorzugsweise ≤ 1.1 V, besonders bevorzugt ≤ 1.0 V.

Die Doppelbrechung Δn der erfindungsgemäßen Flüssigkristallmischungen ist vorzugsweise ≤ 0,11, besonders bevorzugt ≤ 0,09.

Die Rotationsviskosität γ₁ der erfindungsgemäßen Flüssigkristallmischungen bei 20 °C ist vorzugsweise ≤ 180 mPa·s, besonders bevorzugt ≤ 160 mPa·s.

Der nematische Phasenbereich der erfindungsgemäßen Flüssigkristallmischungen ist vorzugsweise mindestens 90°, insbesondere mindestens 100° breit. Vorzugsweise erstreckt sich dieser Bereich mindestens von -40° bis +80°C.

Es versteht sich, dass durch geeignete Wahl der Komponenten der erfindungsgemäßen Mischungen auch höhere Klärpunkte (z.B. oberhalb 100 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Messungen des "Voltage Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I eine deutlich geringere Abnahme des HR unter UV-Belastung aufweisen als analoge Mischungen enthaltend anstelle den Verbindungen der Formel I Cyanophenylcyclohexane der Formel 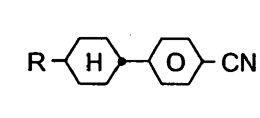 oder Ester der Formel

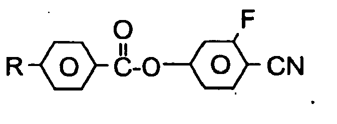

Die Lichtstabilität und UV-Stabilität der erfindungsgemäßen Mischungen ist erheblich besser, d.h. sie zeigen eine deutlich kleinere Abnahme des HR unter Licht- bzw. UV-Belastung. Bereits geringe Konzentrationen der Verbindungen (< 10 Gew.%) der Formel I in den Mischungen erhöhen die HR gegenüber Mischungen aus dem Stand der Technik um 6 % und mehr.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise, beispielsweise indem man eine oder mehrere Verbindungen der Formel I mit einer oder mehreren Verbindungen der Formeln II-XXIII oder mit weiteren flüssigkristallinen Verbindungen und/oder Additiven mischt. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze, wie z. B. UV-Stabilisatoren wie Tinuvin^{®} der Fa. Ciba, Antioxidantien, Radikalfänger, Nanopartikel, etc. enthalten. Beispielsweise können 0-15 % pleochroitische Farbstoffe oder chirale Dotierstoffe zugesetzt werden. Geeignete Stabilisatoren und Dotierstoffe werden nachfolgend in den Tabellen C und D genannt.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n und m sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten R^{1*}, R^{2*}, L^{1*} und L^{2*}:

| Code für R^{1*}, R^{2*}, L^{1*}, L^{2*}, L^{3*} | R^{1*} | R^{2*} | L^{1*} | L^{2*} |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte Mischungskomponenten finden sich in den Tabellen A und B.

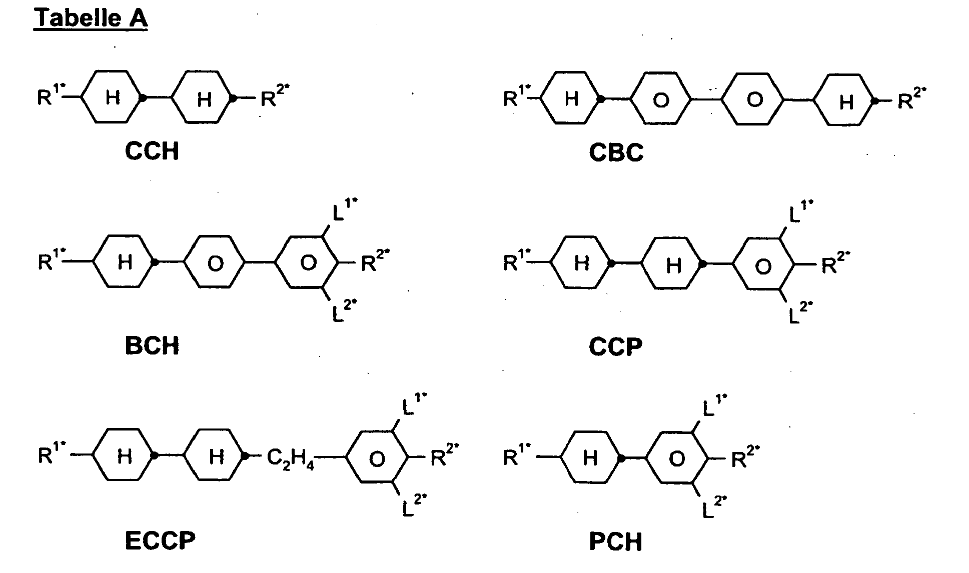

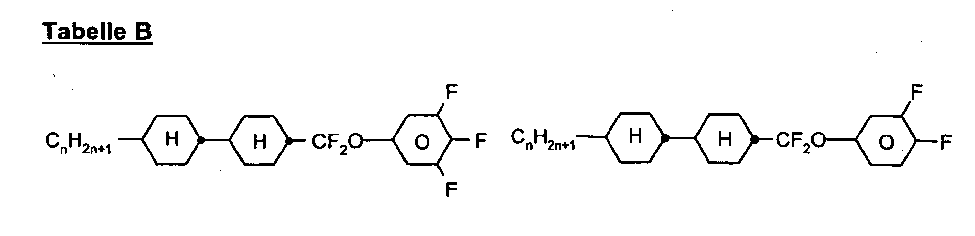

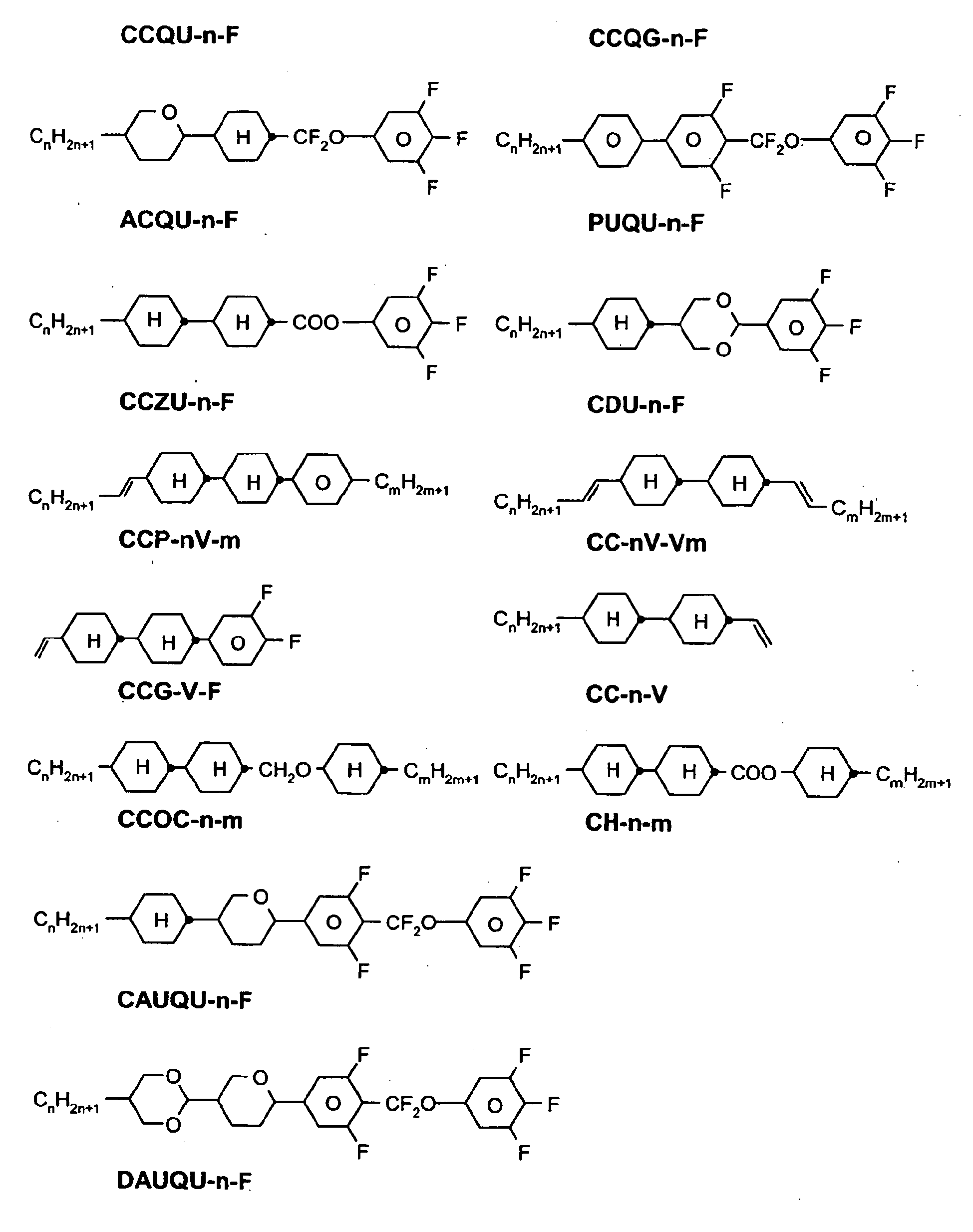

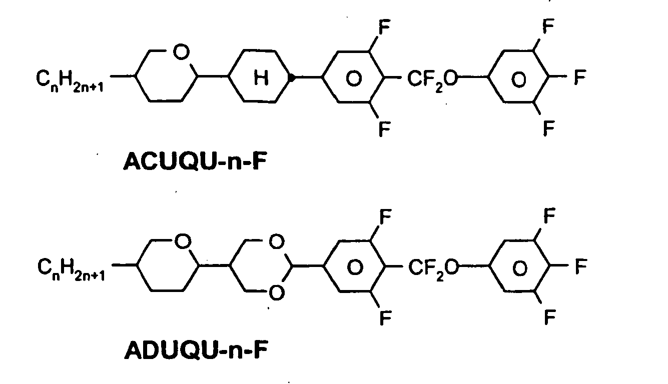

Besonders bevorzugt sind flüssigkristalline Mischungen, die neben den Verbindungen der Formeln I mindestens ein, zwei, drei, vier oder mehr Verbindungen aus der Tabelle A oder B enthalten.

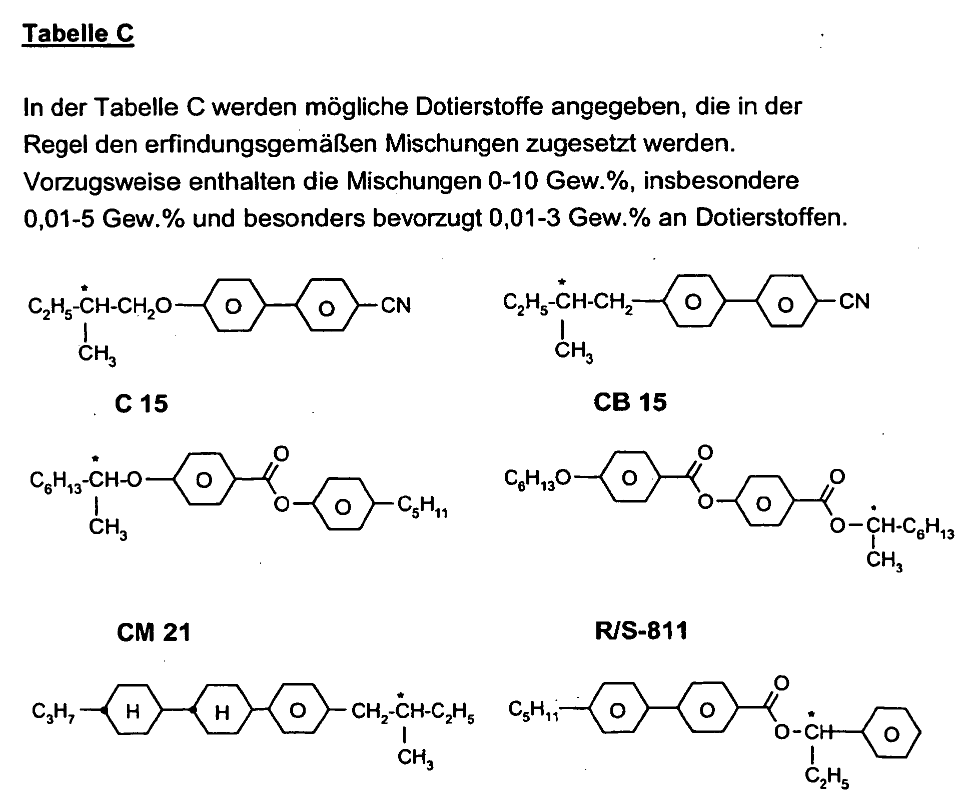

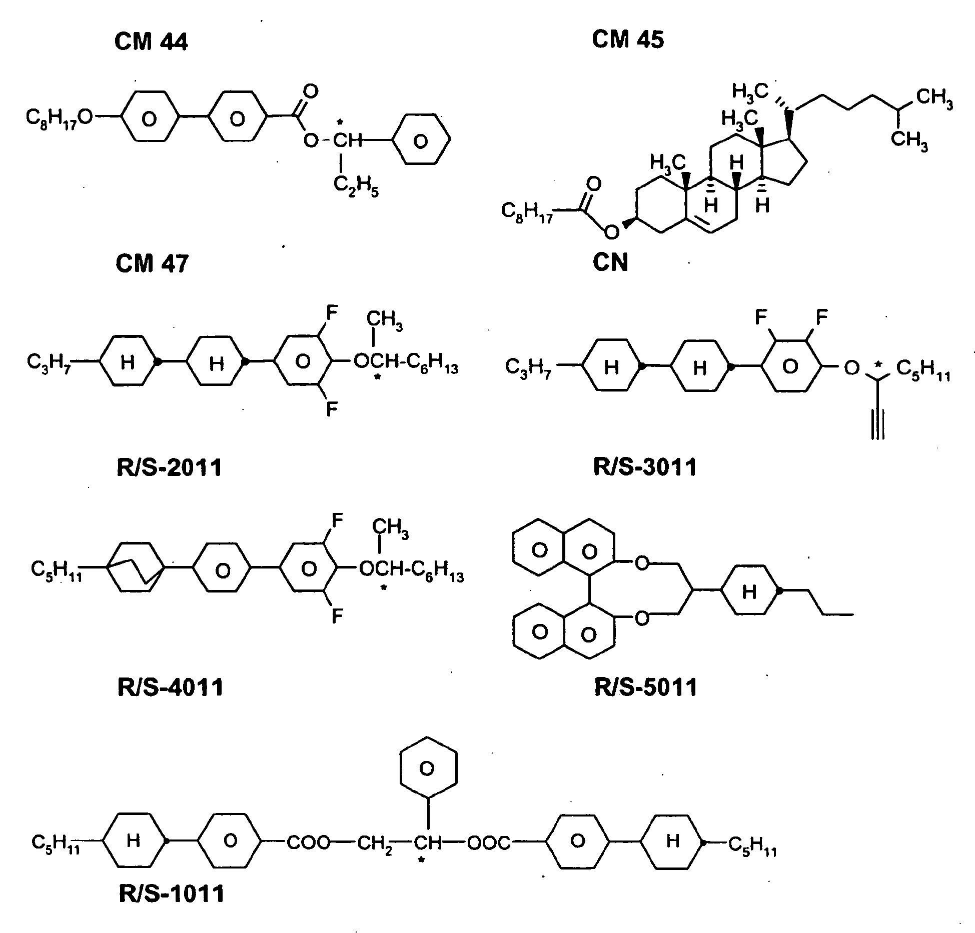

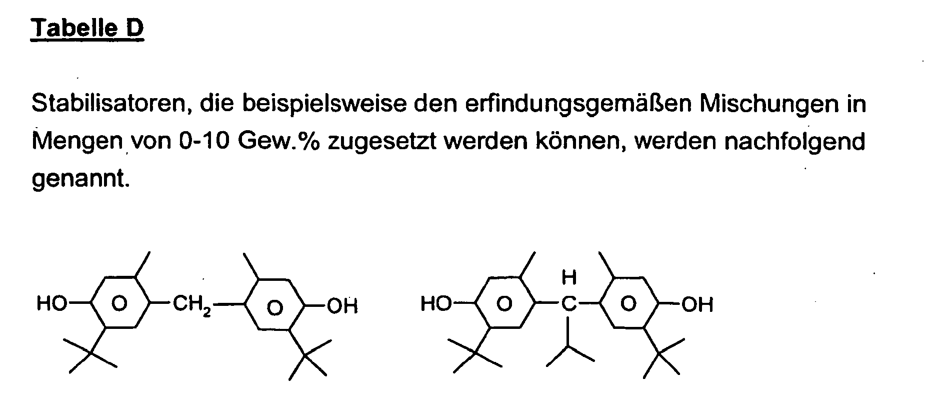

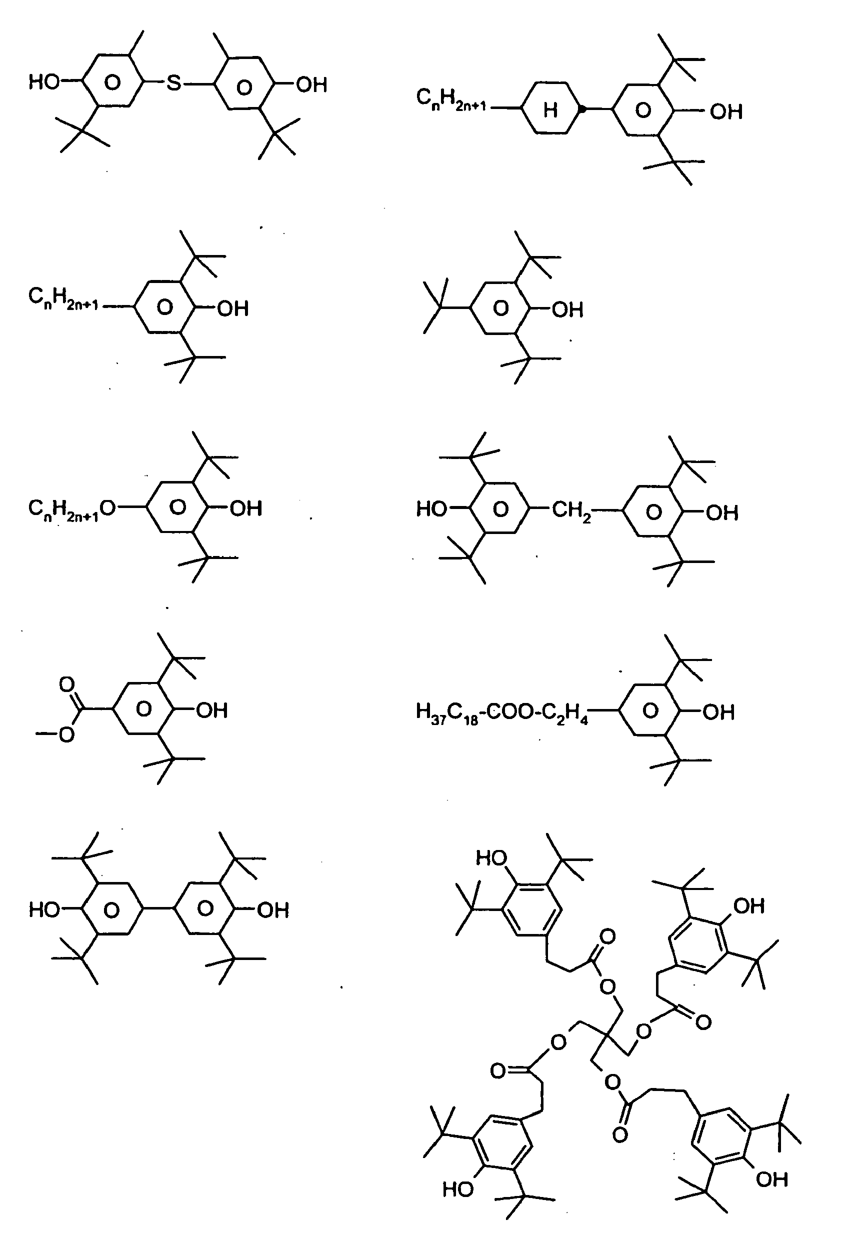

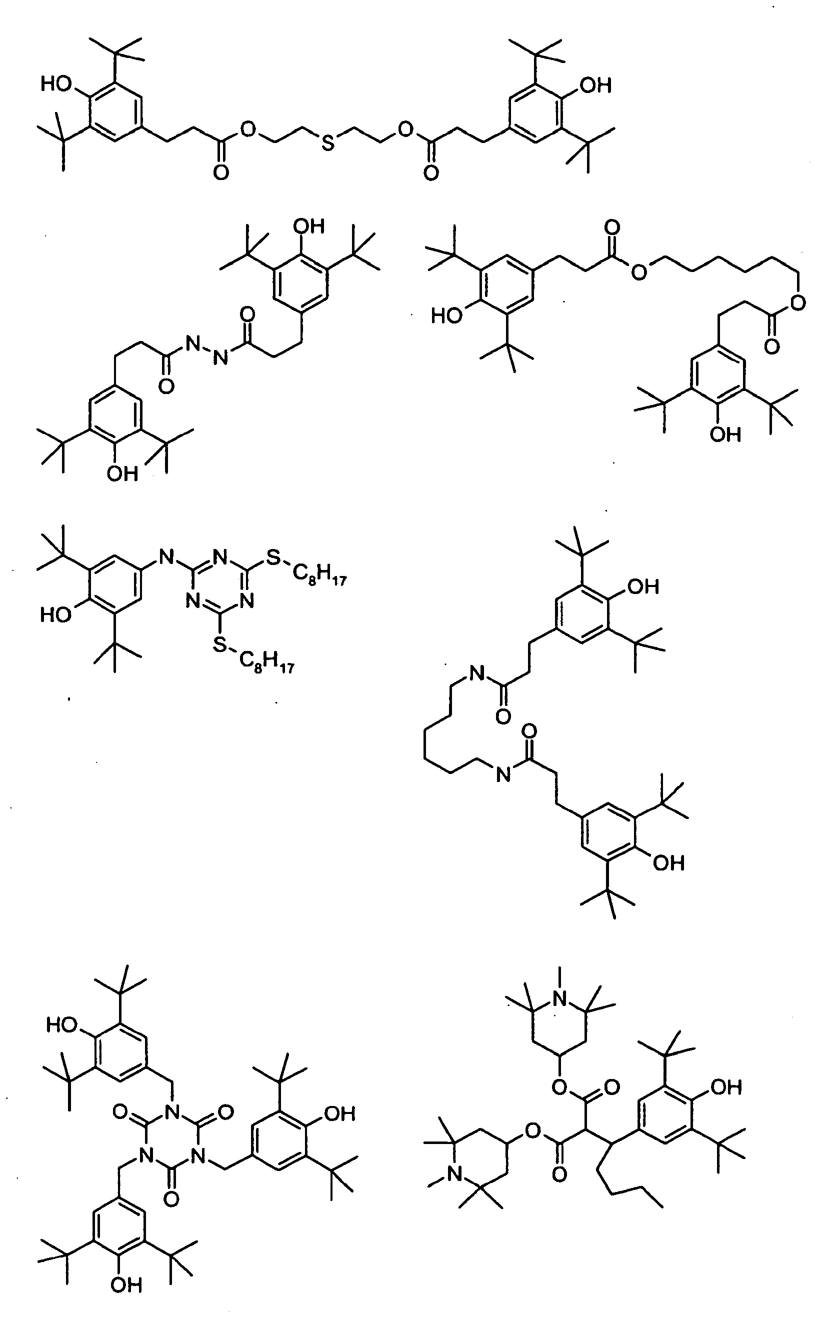

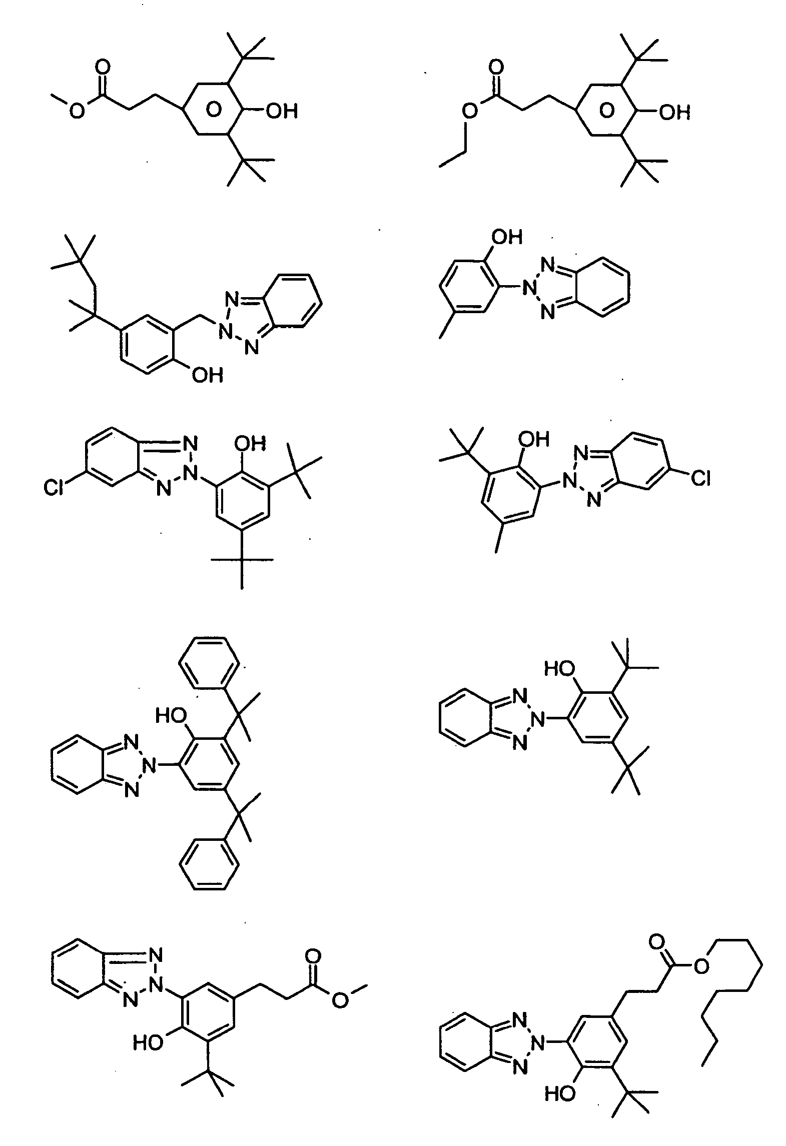

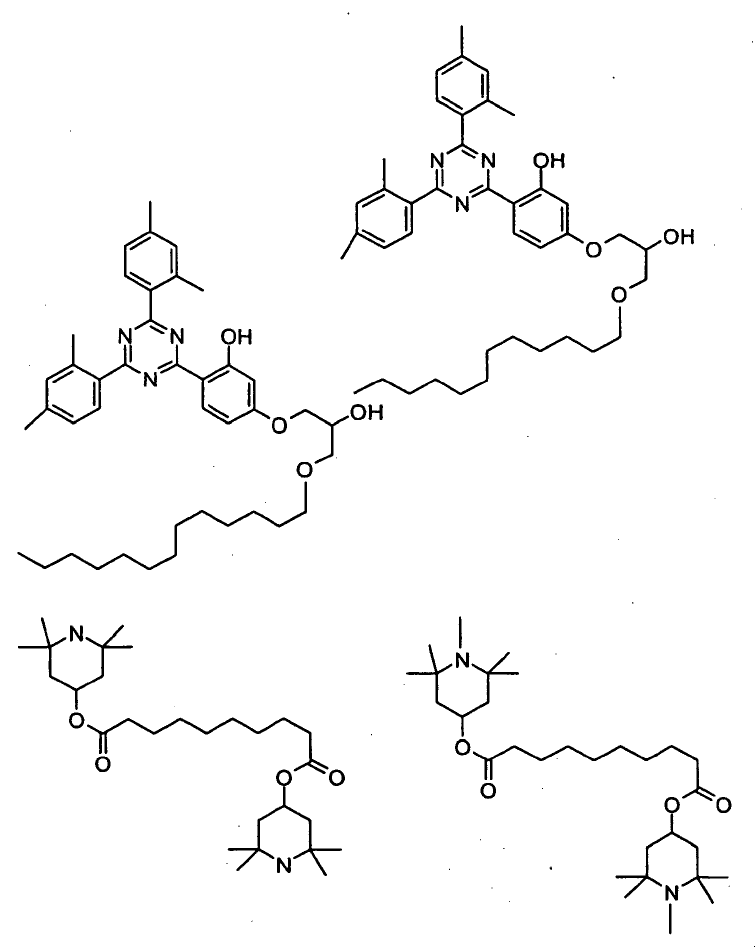

Die folgenden Beispiele sollen die Erfindung erläutern, ohne sie zu begrenzen.

Vor- und nachstehend bedeuten Prozentangaben Gewichtsprozent. Alle Temperaturen sind in Grad Celsius angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Weiterhin bedeutet
- Δn die optische Anisotropie bei 589 nm und 20 °C),
- γ₁ die Rotationsviskosität (mPa·s) bei 20 °C,
- V₁₀ die Spannung (V) für 10 % Transmission (Blickrichtung senkrecht zur Plattenoberfläche), (Schwellenspannung),
- V₉₀ die Spannung (V) für 90 % Transmission (Blickrichtung senkrecht zur Plattenoberfläche),
- Δε die dielektrische Anisotropie bei 20°C und 1 kHz (Δε = ε_{∥} - ε_{┴}, wobei ε_{∥} die Dielektrizitätskonstante parallel zu den Moleküllängsachsen und ε_{┴} die Dielektrizitätskonstante senkrecht dazu bedeutet).

Die elektro-optischen Daten werden in einer TN-Zelle im 1. Minimum (d.h. bei einem d · Δn-Wert von 0,5 µm) bei 20°C gemessen, sofern nicht ausdrücklich etwas anderes angegeben wird. Die optischen Daten werden bei 20 °C gemessen, sofern nicht ausdrücklich etwas anderes angegeben wird. Alle physikalischen Eigenschaften werden nach "Merck Liquid Crystals, Physical Properties of Liquid Crystals" Status Nov. 1997, Merck KGaA, Deutschland bestimmt und gelten für eine Temperatur von 20 °C, sofern nicht explizit anders angegeben.

### Vergleichsbeispiel 1

| | | | |
|---|---|---|---|
| CCP-3F.F.F | 12,00 % | Klärpunkt [°C]: | 90,0 |
| CCQU-2-F | 8,00 % | Δn [589 nm, 20 °C]: | 0,0710 |
| CCQU-3-F | 8,00 % | Δε [kHz, 20 °C]: | +10,5 |
| CCQU-5-F | 8,00 % | γ₁ [mPa·s, 20 °C]: | 157 |
| PUQU-2-F | 10,00 % | V₁₀ [V]: | 1.29 |
| CCOC-4-3 | 4,00 % | V₉₀ [V]: | 1.97 |
| CCOC-3-3 | 4,00 % | | |
| CCOC-3-5 | 4,00 % | | |
| CH-43 | 3,00 % | | |
| CH-45 | 2,00 % | | |
| CCH-301 | 12,00 % | | |
| CCH-303 | 3,00 % | | |
| CCZU-2-F | 4,00 % | | |
| CCZU-3-F | 14,00 % | | |
| CCZU-5-F | 4,00 % | | |

### Vergleichsbeispiel 2

| | | | |
|---|---|---|---|
| CCQG-3-F | 5,00 % | Klärpunkt [°C]: | 89,5 |
| CCQU-2-F | 11,00% | Δn [589 nm, 20 °C]: | 0,0710 |
| CCQU-3-F | 14,00 % | V₁₀ [V]: | 1.00 |
| CCQU-5-F | 12,00 % | V₉₀ [V]: | 1.55 |
| PUQU-3-F | 5,00 % | | |
| CCOC-4-3 | 4,00 % | | |
| CCOC-3-3 | 3,00 % | | |
| CCOC-3-5 | 2,00 % | | |
| ACQU-2-F | 12,00 % | | |
| ACQU-3-F | 12,00 % | | |
| ACQU-4-F | 13,00 % | | |
| CAUQU-3-F | 7,00 % | | |

Die Mischung weist gegenüber der Mischung aus Vergleichsbeispiel 1 eine deutlich geringere Schwellenspannung bei gleicher Doppelbrechung und praktisch gleichem Klärpunkt auf.

### Beispiel 1

| | | | |
|---|---|---|---|
| CCP-5F.F.F | 5,00 % | Klärpunkt [°C]: | 85,5 |
| CCQU-2-F | 11,00 % | Δn [589 nm, 20 °C]: | 0,0792 |
| CCQU-3-F | 13,00 % | V₁₀ [V]: | 0.96 |
| CCQU-5-F | 11,00 % | V₉₀ [V]: | 1.51 |
| PUQU-3-F | 8,00 % | | |
| ACQU-2-F | 11,00 % | | |
| ACQU-3-F | 12,00 % | | |
| ACQU-4-F | 11,00 % | | |
| CCP-V-1 | 10,00 % | | |
| CAUQU-3-F | 8,00 % | | |

Die Mischung weist gegenüber der Mischung aus Vergleichsbeispiel 1 eine deutlich geringere Schwellenspannung bei fast gleicher Doppelbrechung und etwas niedrigerem Klärpunkt auf.

## Patentansprüche

1. Flüssigkristallines Medium, **dadurch gekennzeichnet, dass** es eine oder mehrere Verbindungen der Formel 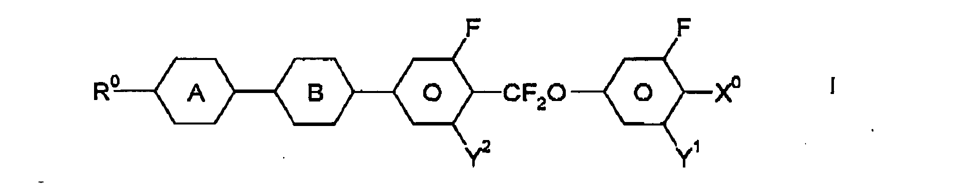 enthält, worin
R⁰ einen halogenierten oder unsubstituierten Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 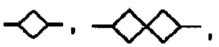 -O-, -CO-O- oder -O-CO- so ersetzt sein können, dass O-Atome nicht direkt miteinander verknüpft sind,
X⁰ F, Cl, CN, SF₅, SCN, NCS, halogenierter Alkylrest, halogenierter Alkenylrest, halogenierter Alkoxyrest oder halogenierter Alkenyloxyrest mit bis zu 6 C-Atomen, und
Y^{1,2} jeweils unabhängig voneinander H oder F, und 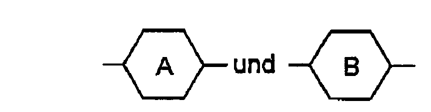 jeweils unabhängig voneinander 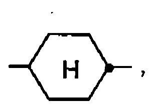 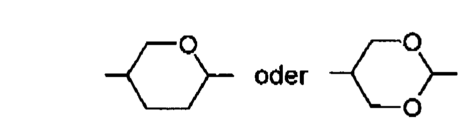 bedeuten, wobei mindestens einer der Ringe 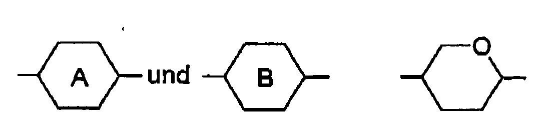 bedeuten,
und
eine oder mehrere Verbindungen ausgewählt aus folgenden Formeln enthält, 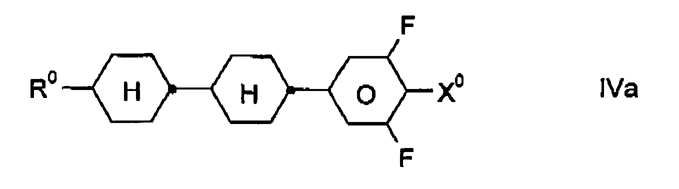 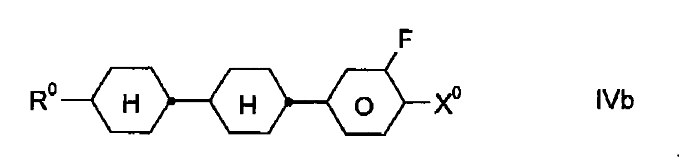 worin
R⁰ einen halogenierten oder unsubstituierten Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 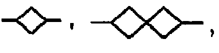 -O-, -CO-O- oder -O-CO- so ersetzt sein können, dass O-Atome nicht direkt miteinander verknüpft sind,
X⁰ F, Cl, CN, SF₅, SCN, NCS, halogenierter Alkylrest, halogenierter Alkenylrest, halogenierter Alkoxyrest oder halogenierter Alkenyloxyrest mit bis zu 6 C-Atomen,
bedeuten,
und das Medium 2-30 Gew.% an Verbindungen der Formel IV enthält.

2. Flüssigkristallines Medium nach Anspruch 1, **dadurch gekennzeichnet, dass** es eine oder mehrere Verbindungen ausgewählt aus folgenden Formeln enthält, 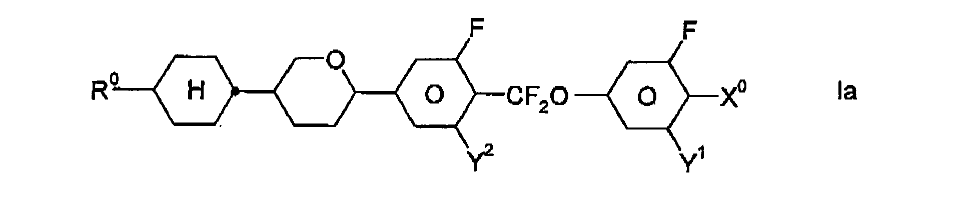 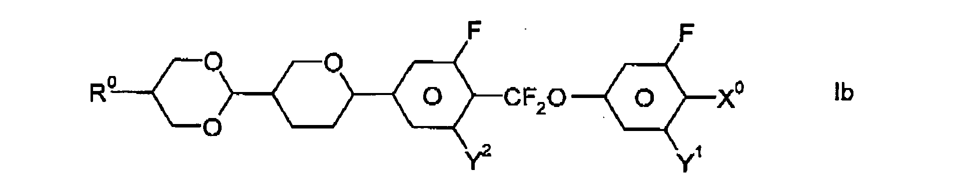 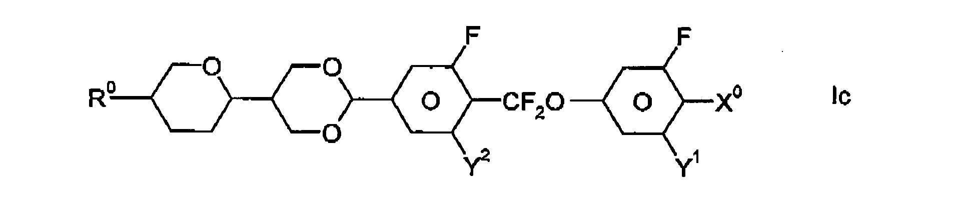 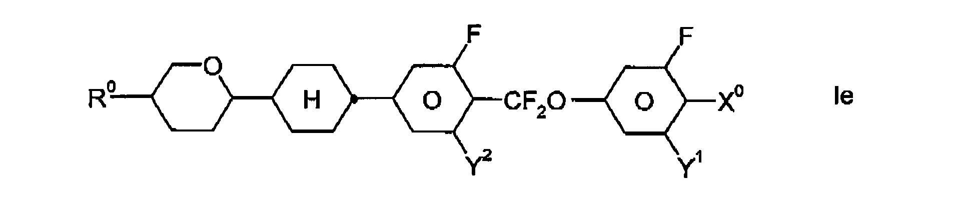 worin R⁰ und X⁰ die in Anspruch 1 angegebene Bedeutungen haben.

3. Flüssigkristallines Medium nach Anspruch 1 oder 2, **dadurch gekennzeichnet, dass** es zusätzlich eine oder mehrere Verbindungen ausgewählt aus folgenden Formeln enthält, 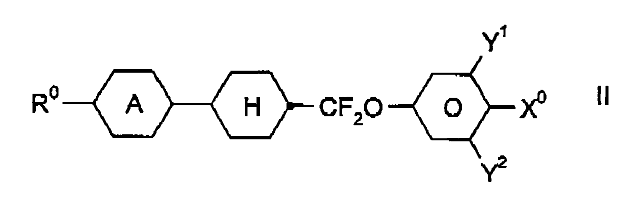 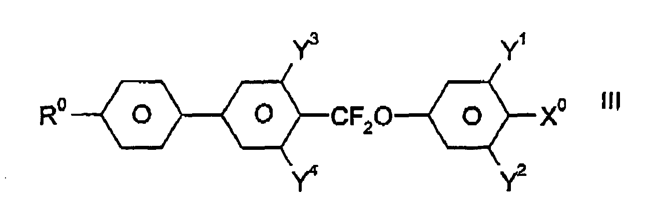 worin A, R⁰, X⁰, Y¹ und Y² die in Anspruch 1 angegebene Bedeutungen besitzen und Y³ und Y⁴ jeweils unabhängig voneinander H oder F bedeuten.

4. Flüssigkristallines Medium nach Anspruch 3, **dadurch gekennzeichnet, dass** es eine oder mehrere Verbindungen ausgewählt aus folgenden Formeln enthält, 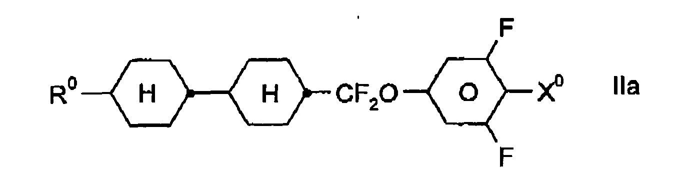 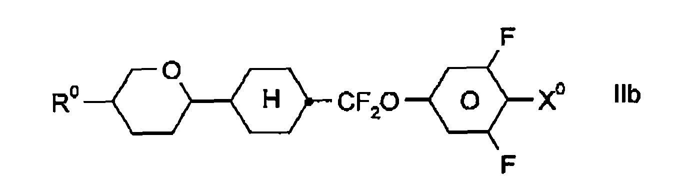 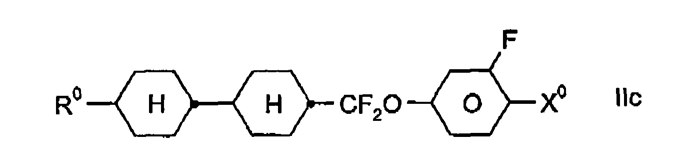 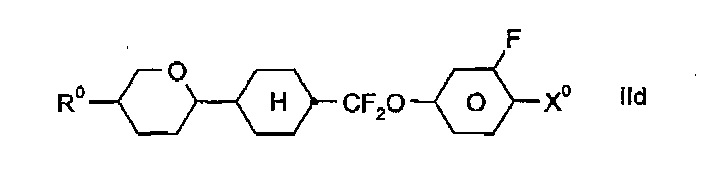 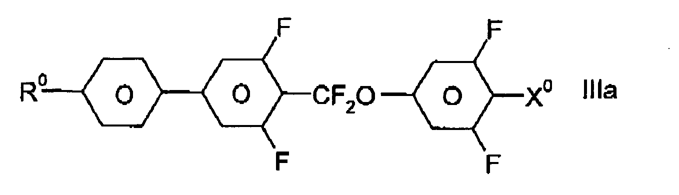 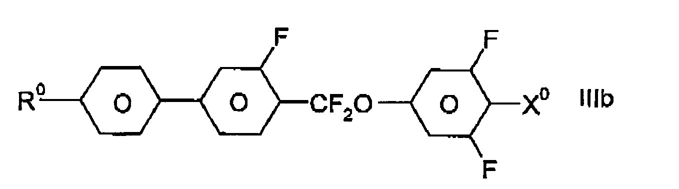 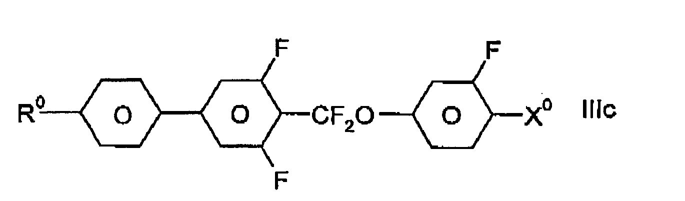 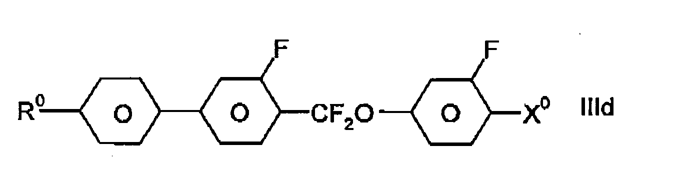 worin R⁰ und X⁰ die in Anspruch 1 angegebenen Bedeutungen haben.

5. Flüssigkristallines Medium nach einem oder mehreren der Ansprüche 1 bis 4, **dadurch gekennzeichnet, dass** es zusätzlich eine oder mehrere Verbindungen ausgewählt aus folgenden Formeln enthält, 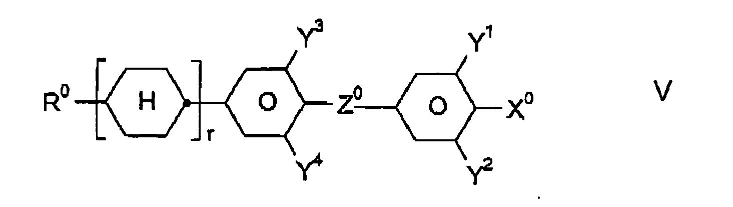 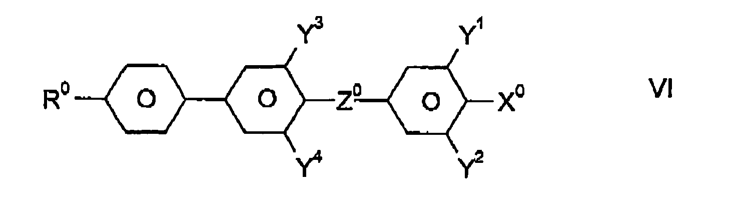 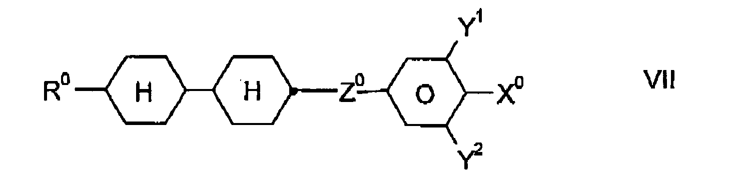 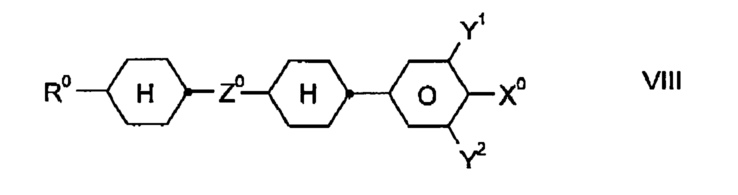 worin R⁰, X⁰ und Y¹⁻⁴ die in Anspruch 3 angegebenen Bedeutungen besitzen,
Z⁰ -C₂H₄-, -(CH₂)₄-, -CH=CH-, -CF=CF-, -C₂F₄-, -CH₂CF₂-, -CF₂CH₂-, -CH₂O-, -OCH₂-, -COO- oder -OCF₂-, in Formel V und VI auch eine Einfachbindung, in Formel V und VIII auch -CF₂O-, und
r 0 oder 1 bedeutet.

6. Flüssigkristallines Medium nach einem oder mehreren der Ansprüche 1 bis 5, **dadurch gekennzeichnet, dass** es zusätzlich eine oder mehrere Verbindungen ausgewählt aus folgenden Formeln enthält, 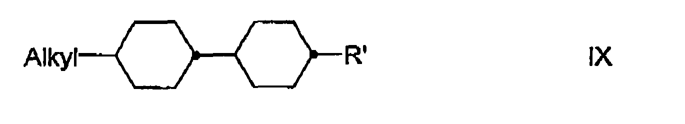 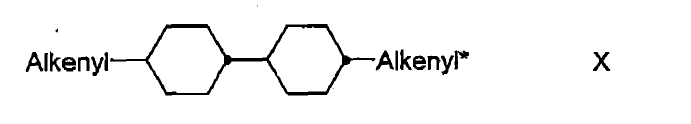 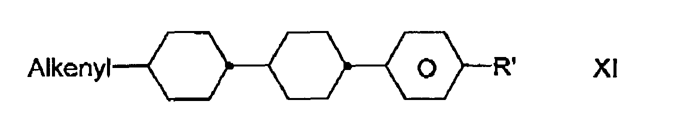 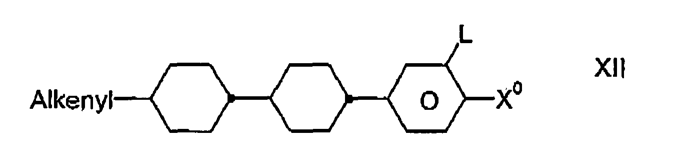 worin X⁰ die in Anspruch 1 angegebene Bedeutung besitzt,
L H oder F,
"Alkyl" C₁₋₇-Alkyl,
R' C₁₋₇-Alkyl, C₁₋₆-Alkoxy oder C₂₋₇-Alkenyl, und
"Alkenyl" und "Alkenyl*" jeweils unabhängig voneinander C₂₋₇-Alkenyl bedeuten.

7. Flüssigkristallines Medium nach einem oder mehreren der Ansprüche 1 bis 6, **dadurch gekennzeichnet, dass** es zusätzlich eine oder mehrere Verbindungen ausgewählt aus folgenden Formeln enthält, 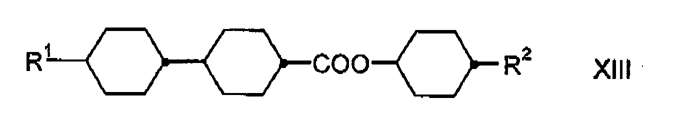 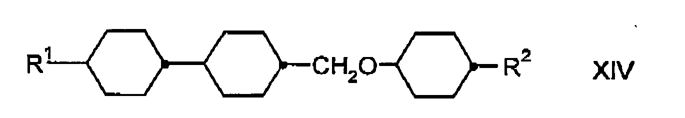 worin R¹ und R² jeweils unabhängig voneinander n-Alkyl, Alkoxy, Oxaalkyl, Fluoralkyl oder Alkenyl mit jeweils bis zu 9 C-Atomen bedeuten.

8. Flüssigkristallines Medium nach einem oder mehreren der Ansprüche 1 bis 7, **dadurch gekennzeichnet, dass** es
2-40 Gew.% an Verbindungen der Formel I,
20-90 Gew.% an Verbindungen der Formel II,
2-30 Gew.% an Verbindungen der Formel III,
gegebenenfalls 2-30 Gew.% an Verbindungen der Formeln IX-XII,
gegebenenfalls 4-30 Gew.% an Verbindungen der Formel XIV enthält.

9. Verwendung eines flüssigkristallinen Mediums nach einem oder mehreren der Ansprüche 1 bis 8 für elektrooptische Zwecke.

10. Elektrooptische Flüssigkristallanzeige enthaltend ein flüssigkristallines Medium nach einem oder mehreren der Ansprüche 1 bis 8.

11. Verfahren zur Herstellung eines flüssigkristallinen Mediums nach einem oder mehreren der Ansprüche 1 bis 9, **dadurch gekennzeichnet, dass** man eine oder mehrere Verbindungen der Formel I und eine oder mehrere Verbindungen der formel IVa und/oder IVb wie in Anspruch 1 definiert mit einer oder mehreren Verbindungen gemäß in einem oder mehreren der Ansprüche 3 bis 7 oder mit weiteren flüssigkristallinen Verbindungen und/oder Additiven mischt.

## Claims

1. Liquid-crystalline medium, **characterised in that** it comprises one or
more compounds of the formula I 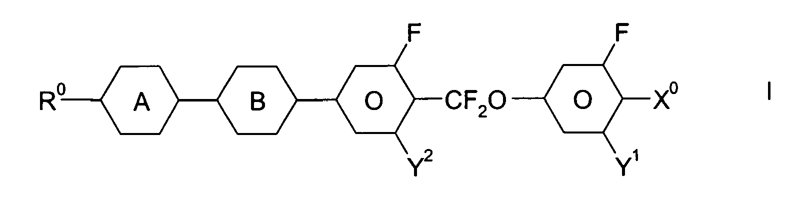 in which
R⁰ denotes a halogenated or unsubstituted alkyl or alkoxy radical having 1 to 15 C atoms, where, in addition, one or more CH₂ groups in these radicals may each, independently of one another, be replaced by -C≡C-, -CF₂O-, -CH=CH-, 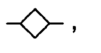 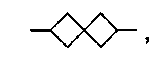 -O-, -CO-O- or -O-CO- in such a way that O atoms are not linked directly to one another,
X⁰ denotes F, Cl, CN, SF₅, SCN, NCS, a halogenated alkyl radical, a halogenated alkenyl radical, a halogenated alkoxy radical or a halogenated alkenyloxy radical having up to 6 C atoms, and
Y^{1,2} each, independently of one another, denote H or F, and 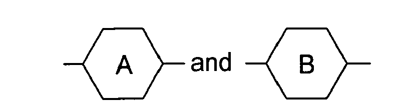
each, independently of one another, denote 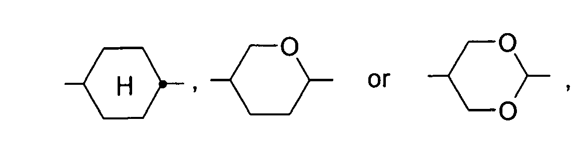 where at least one of the rings 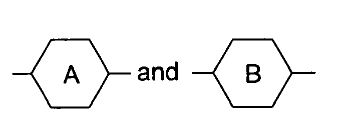 denotes 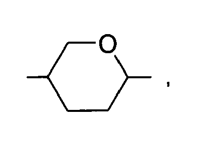 and
one or more compounds selected from the following formulae: 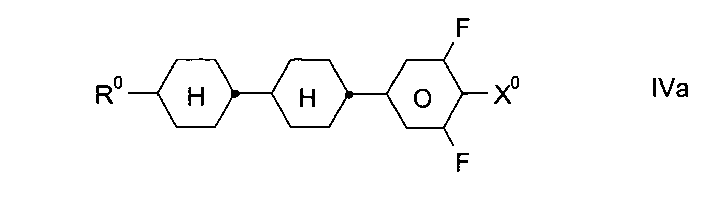 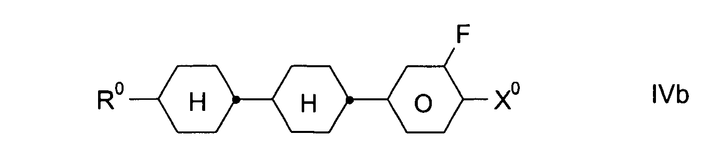 in which
R⁰ denotes a halogenated or unsubstituted alkyl or alkoxy radical having 1 to 15 C atoms, where, in addition, one or more CH₂ groups in these radicals may each, independently of one another, be replaced by -C≡C-, -CF₂O-, -CH=CH-, 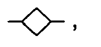 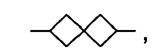 -O-, -CO-O- or -O-CO- in such a way that O atoms are not linked directly to one another,
X⁰ denotes F, Cl, CN, SF₅, SCN, NCS, a halogenated alkyl radical, a halogenated alkenyl radical, a halogenated alkoxy radical or a halogenated alkenyloxy radical having up to 6 C atoms,
and the medium comprises 2-30% by weight of compounds of the formula IV.

2. Liquid-crystalline medium according to Claim 1, **characterised in that** it comprises one or more compounds selected from the following formulae: 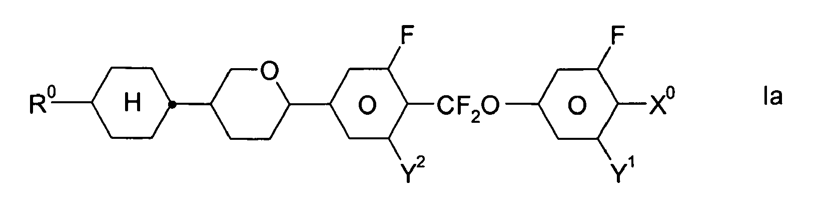 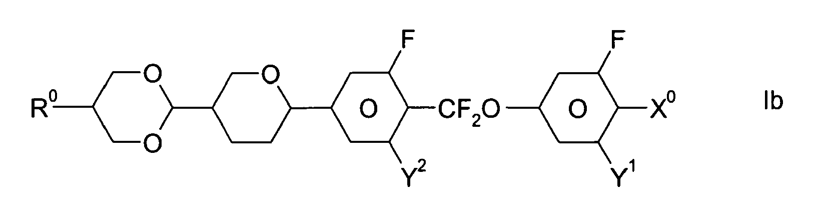 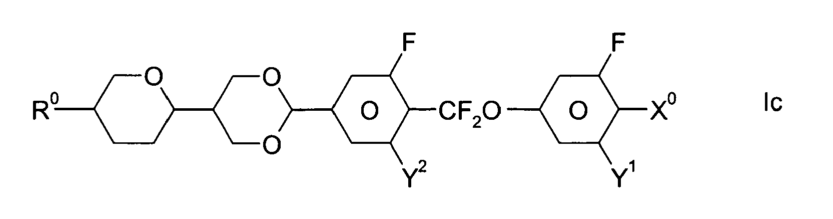 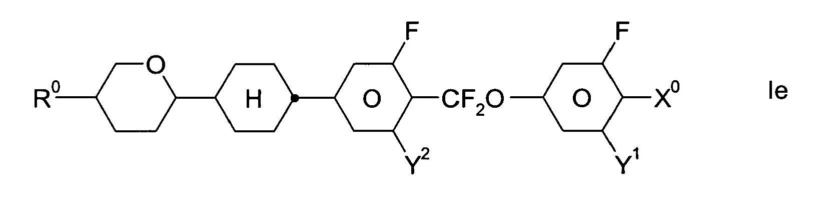 in which R⁰ and X⁰ have the meanings indicated in Claim 1.

3. Liquid-crystalline medium according to Claim 1 or 2, **characterised in that** it additionally comprises one or more compounds selected from the following formulae: 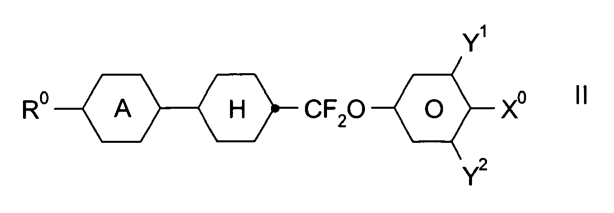 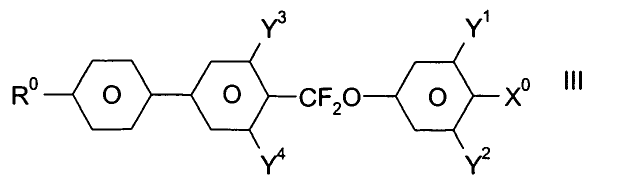 in which A, R⁰, X⁰, Y¹ and Y² have the meanings indicated in Claim 1, and Y³ and Y⁴ each, independently of one another, denote H or F.

4. Liquid-crystalline medium according to Claim 3, **characterised in that** it comprises one or more compounds selected from the following formulae: 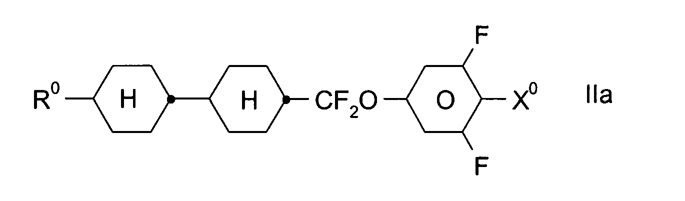 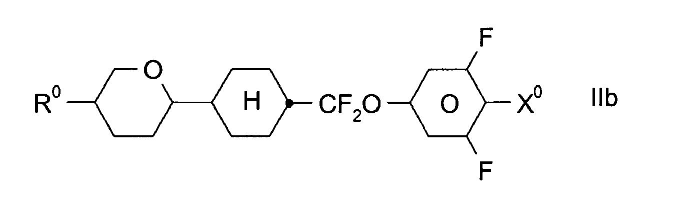 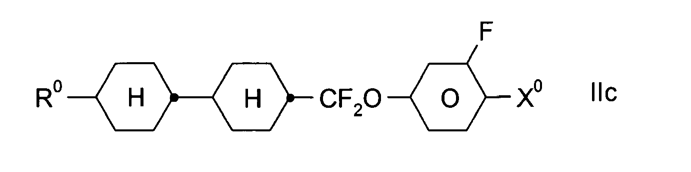 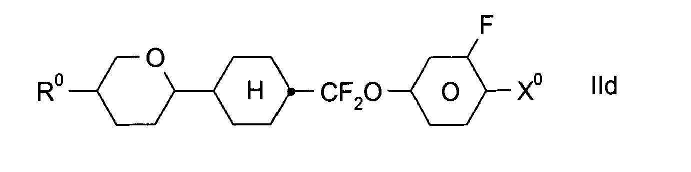 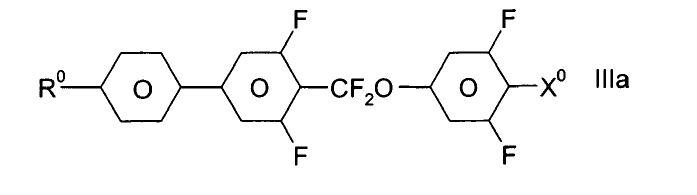 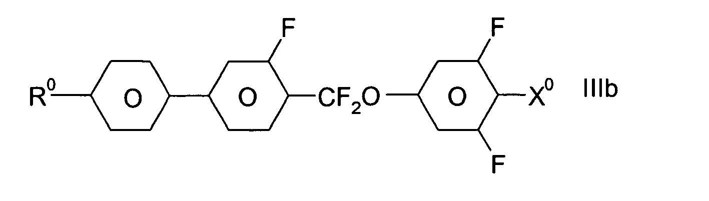 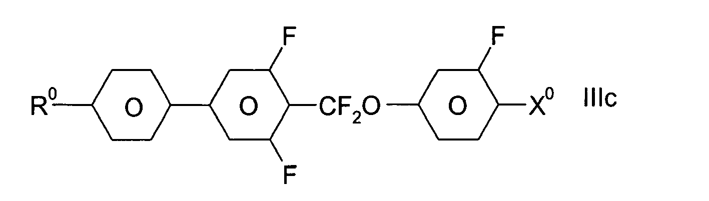 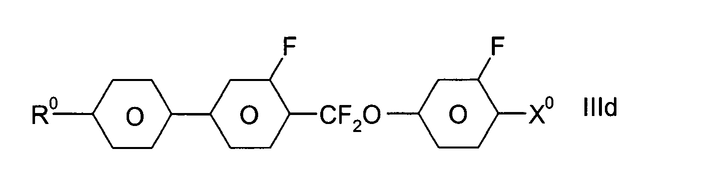 in which R⁰ and X⁰ have the meanings indicated in Claim 1.

5. Liquid-crystalline medium according to one or more of Claims 1 to 4, **characterised in that** it additionally comprises one or more compounds selected from the following formulae: 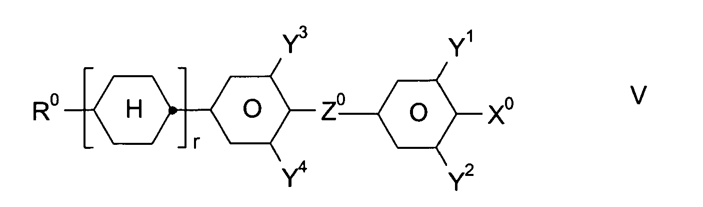 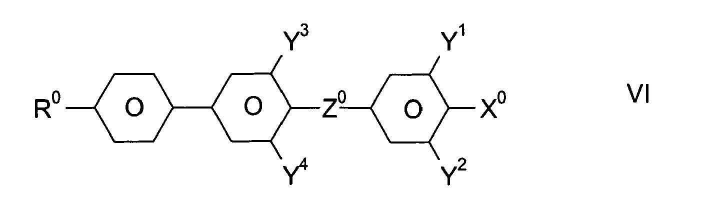 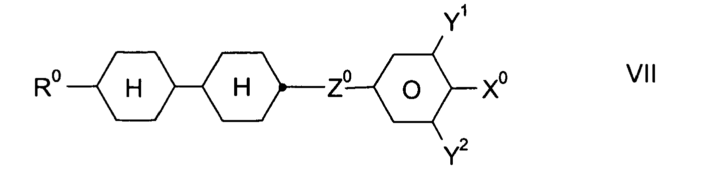 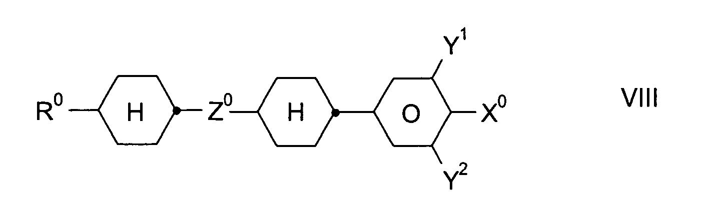 in which R⁰, X⁰ and Y¹⁻⁴ have the meanings indicated in Claim 3,
Z⁰ denotes -C₂H₄-, -(CH₂)₄-, -CH=CH-, -CF=CF-, -C₂F₄-, -CH₂CF₂-, -CF₂CH₂-, -CH₂O-, -OCH₂-, -COO- or -OCF₂-, in formulae V and VI also a single bond, in formulae V and VIII also -CF₂O-, and
r denotes 0 or 1.

6. Liquid-crystalline medium according to one or more of Claims 1 to 5, **characterised in that** it additionally comprises one or more compounds selected from the following formulae: 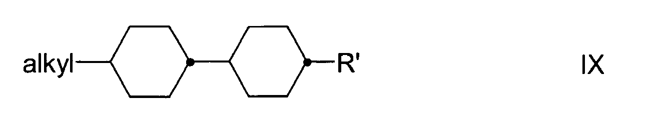 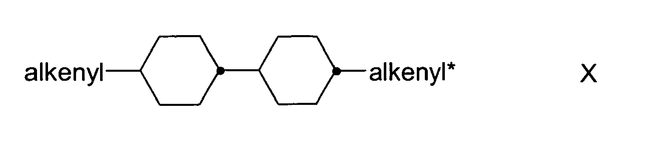 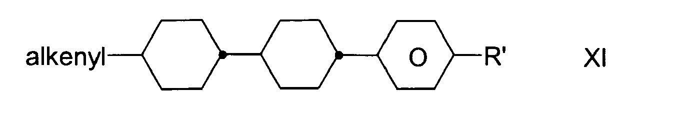 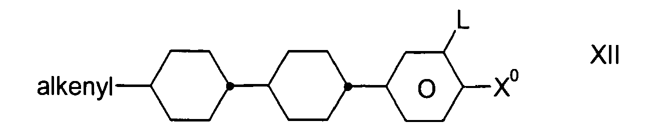 in which X⁰ has the meaning indicated in Claim 1,
L denotes H or F,
"alkyl" denotes C₁₋₇-alkyl,
R' denotes C₁₋₇-alkyl, C₁₋₆-alkoxy or C₂₋₇- alkenyl, and
"alkenyl" and "alkenyl*" each, independently of one another, denote C₂₋₇-alkenyl.

7. Liquid-crystalline medium according to one or more of Claims 1 to 6, **characterised in that** it additionally comprises one or more compounds selected from the following formulae: 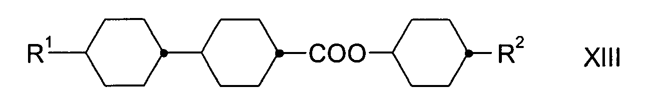 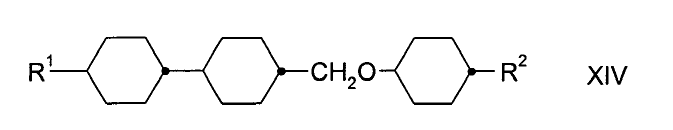 in which R¹ and R² each, independently of one another, denote n-alkyl, alkoxy, oxaalkyl, fluoroalkyl or alkenyl, each having up to 9 C atoms.

8. Liquid-crystalline medium according to one or more of Claims 1 to 7, **characterised in that** it comprises
2-40% by weight of compounds of the formula I,
20-90% by weight of compounds of the formula II,
2-30% by weight of compounds of the formula III,
optionally 2-30% of weight an compounds of the formulae IX-XII,
optionally 4-30% of weight an compounds of the formula XIV.

9. Use of a liquid-crystalline medium according to one or more of Claims 1 to 8 for electro-optical purposes.

10. Electro-optical liquid-crystal display containing a liquid-crystalline medium according to one or more of Claims 1 to 8.

11. Process for the preparation of a liquid-crystalline medium according to one or more of Claims 1 to 9, **characterised in that** one or more compounds of the formula I and one or more compounds of the formula IVa and/or IVb as defined in Claim 1 are mixed with one or more compounds according to one or more of Claims 3 to 7 or with further liquid-crystalline compounds and/or additives.

## Revendications

1. Milieu cristallin liquide, **caractérisé en ce qu'**il comprend un ou plusieurs composés de la formule I 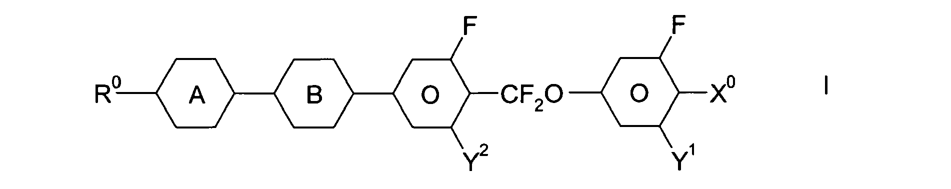 dans laquelle
R⁰ représente un radical alkyle ou alcoxy halogéné ou non substi- tué ayant 1 à 15 atomes de C, dans lequel, en addition, un ou plusieurs groupes CH₂ dans ces radicaux peuvent être, chacun indépendamment l'un de l'autre, remplacés par -C≡C-, -CF₂O-, -CH=CH-, 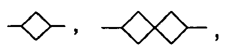 -O-, -CO-O- ou -O-CO- de telle sorte que des atomes de O ne soient pas liés directement l'un à l'autre,
X⁰ représente F, Cl, CN, SF₅, SCN, NCS, un radical alkyle halo- géné, un radical alkényle halogéné, un radical alcoxy halogéné ou un radical alkényloxy halogéné ayant jusqu'à 6 atomes de C, et
Y^{1,2} chacun, indépendamment l'un de l'autre, représentent H ou F, et 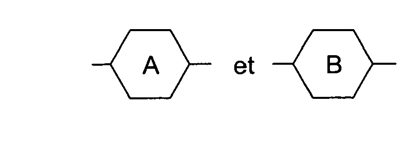
chacun, indépendamment l'un de l'autre, représentent 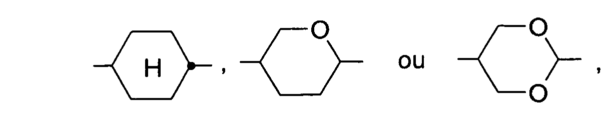 où au moins l'un des cycles 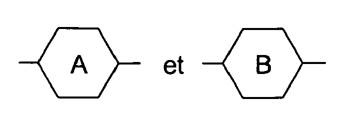 représente 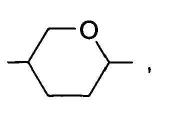 et
un ou plusieurs composés choisis parmi les formules suivantes : 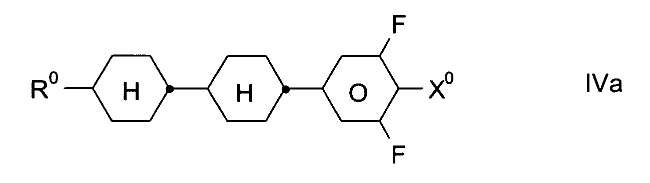 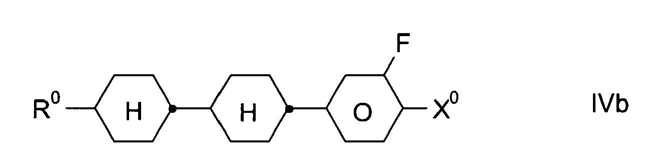 dans lesquelles
R⁰ représente un radical alkyle ou alcoxy halogéné ou non substi- tué ayant 1 à 15 atomes de C, dans lequel, en addition, un ou plusieurs groupes CH₂ dans ces radicaux peuvent être, chacun indépendamment l'un de l'autre, remplacés par -C≡C-, -CF₂O-, -CH=CH-, 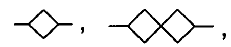 -O-, -CO-O- ou -O-CO- de telle sorte que des atomes de O ne soient pas liés directement l'un à l'autre ,
X⁰ représente F, Cl, CN, SF₅, SCN, NCS, un radical alkyle halo- géné, un radical alkényle halogéné, un radical alcoxy halogéné ou un radical alkényloxy halogéné ayant jusqu'à 6 atomes de C,
et le milieu comprend 2-30% en poids de composés de la formule IV.

2. Milieu cristallin liquide selon la revendication 1, **caractérisé en ce qu'**il comprend un ou plusieurs composés choisis parmi les formules suivantes : 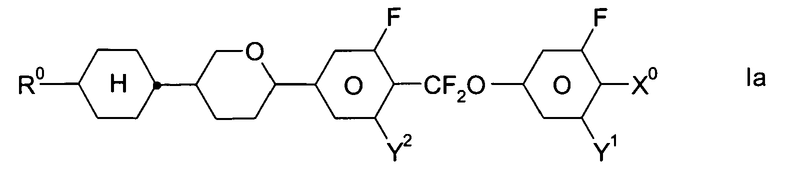 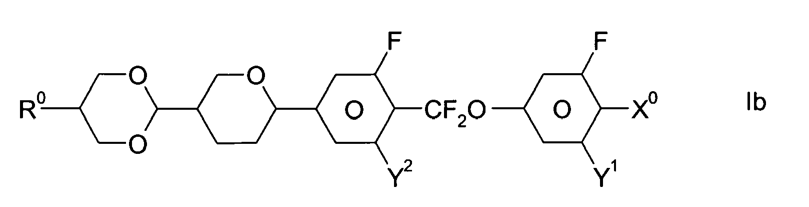 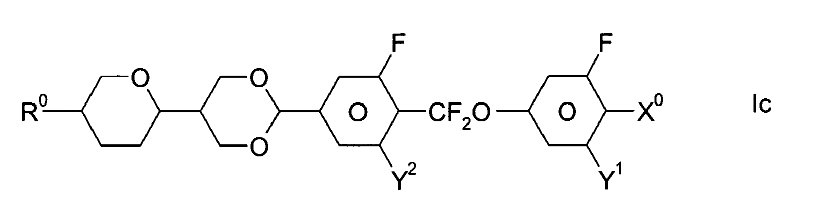 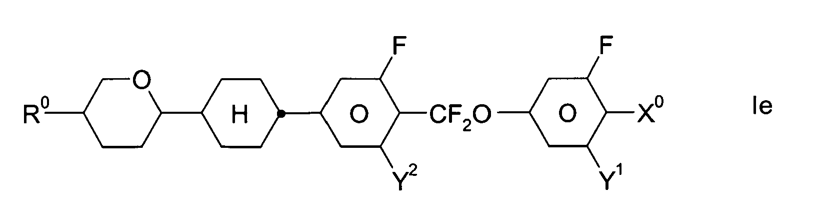 dans lesquelles R⁰ et X⁰ ont les significations indiquées dans la revendication 1.

3. Milieu cristallin liquide selon la revendication 1 ou 2, **caractérisé en ce qu'**il comprend additionnellement un ou plusieurs composés choisis parmi les formules suivantes : 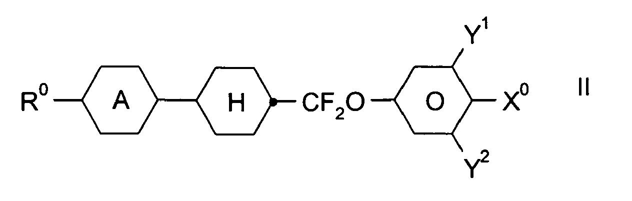 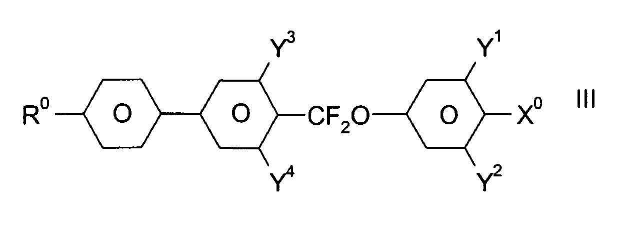 dans lesquelles A, R⁰, X⁰, Y¹ et Y² ont les significations indiquées dans la revendication 1, et Y³ et Y⁴, chacun indépendamment l'un de l'autre, représentent H ou F.

4. Milieu cristallin liquide selon la revendication 3, **caractérisé en ce qu'**il comprend additionnellement un ou plusieurs composés choisis parmi les formules suivantes : 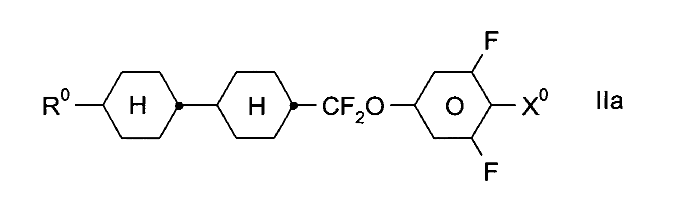 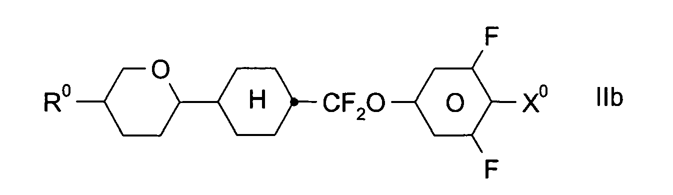 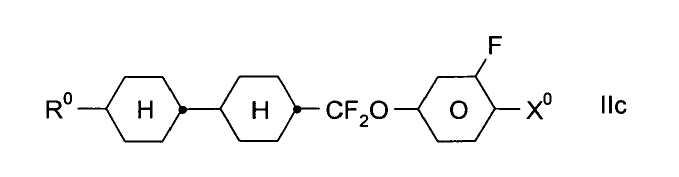 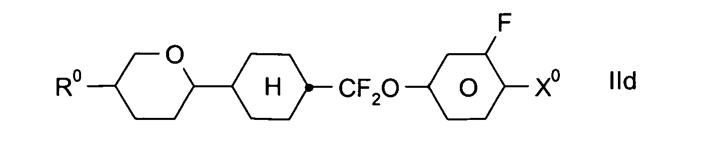 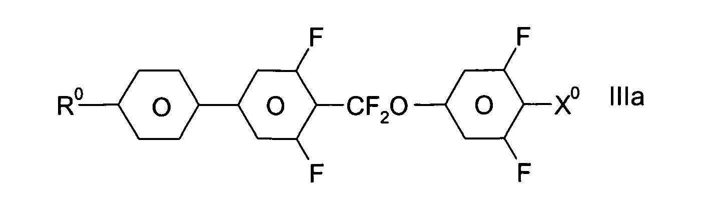 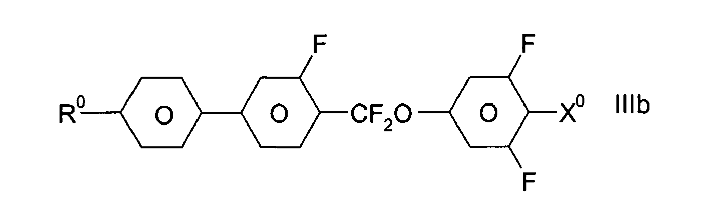 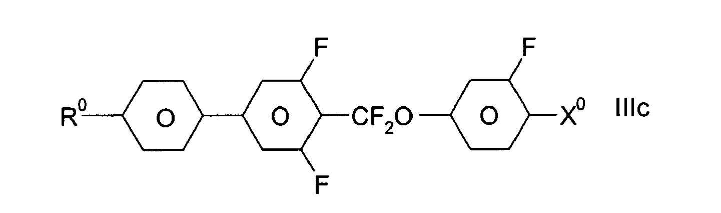 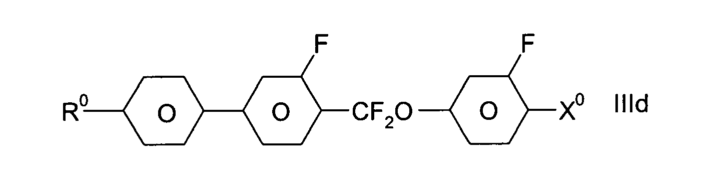 dans lesquelles R⁰ et X⁰ ont les significations indiquées dans la revendication 1.

5. Milieu cristallin liquide selon une ou plusieurs des revendications 1 à 4, **caractérisé en ce qu'**il comprend additionnellement un ou plusieurs composés choisis parmi les formules suivantes : 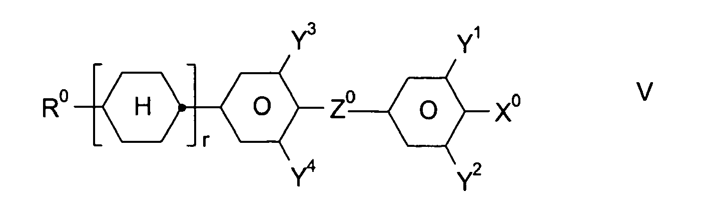 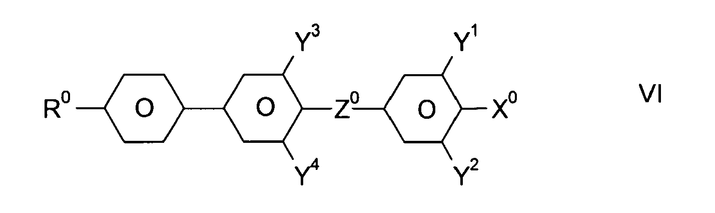 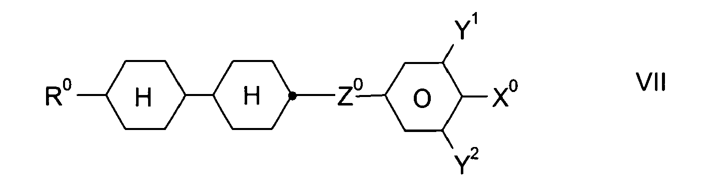 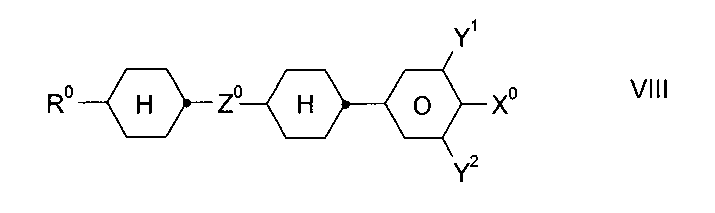 dans lesquelles R⁰, X⁰ et Y¹⁻⁴ ont les significations indiquées dans la revendication 3,
Z⁰ représente -C₂H₄-, -(CH₂)₄-, -CH=CH-, -CF=CF-, -C₂F₄-, -CH₂CF₂-, -CF₂CH₂-, -CH₂O-, -OCH₂-, -COO- ou -OCF₂-, dans les formules V et VI également une liaison simple, dans les for- mules V et VIII également -CF₂O-, et
r représente 0 ou 1.

6. Milieu cristallin liquide selon une ou plusieurs des revendications 1 à 5, **caractérisé en ce qu'**il comprend additionnellement un ou plusieurs composés choisis parmi les formules suivantes : 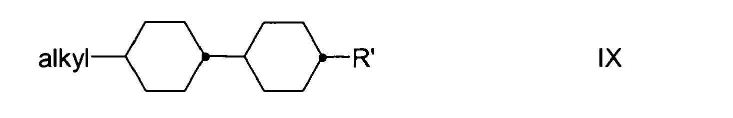 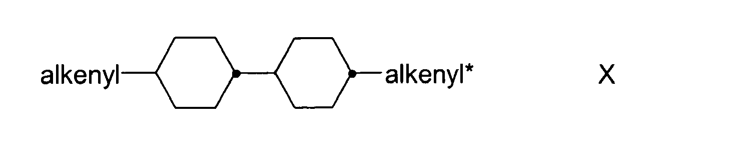 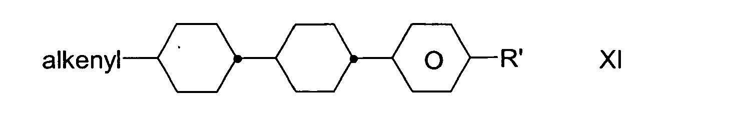 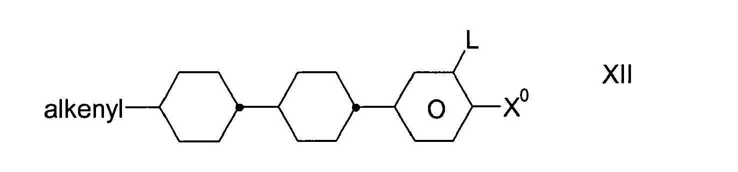 dans lesquelles X⁰ a la signification indiquée dans la revendication 1,
L représente H ou F,
"alkyl" représente C₁₋₇alkyle,
R' représente C₁₋₇alkyle, C₁₋₆-alcoxy ou C₂₋₇- alkényle, et
"alkenyl" et "alkenyl*" chacun indépendamment l'un de l'autre, représentent C₂₋₇-alkényle.

7. Milieu cristallin liquide selon une ou plusieurs des revendications 1 à 6, **caractérisé en ce qu'**il comprend additionnellement un ou plusieurs composés choisis parmi les formules suivantes : 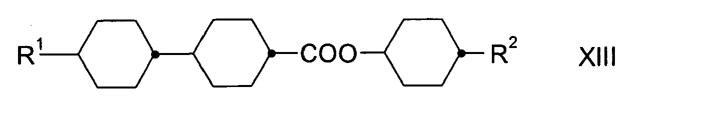 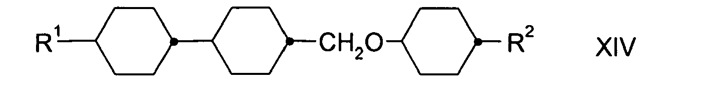 dans lesquelles R¹ et R² chacun indépendamment l'un de l'autre, représentent n-alkyle, alcoxy, oxaalkyle, fluoroalkyle ou alkényle, chacun ayant jusqu'à 9 atomes de C.

8. Milieu cristallin liquide selon une ou plusieurs des revendications 1 à 7, **caractérisé en ce qu'**il comprend
2-40% en poids de composés de la formule I,
20-90% en poids de composés de la formule II,
2-30% en poids de composés de la formule III,
optionnellement, 2-30% en poids de composés des formules IX-XII,
optionnellement, 4-30% en poids de composés de la formule XIV.

9. Utilisation d'un milieu cristallin liquide selon une ou plusieurs des revendications 1 à 8 à des fins électro-optiques.

10. Affichage à cristaux liquides électro-optique contenant un milieu cristallin liquide selon une ou plusieurs des revendications 1 à 8.

11. Procédé pour la préparation d'un milieu cristallin liquide selon une ou plusieurs des revendications 1 à 9, **caractérisé en ce qu'**un ou plusieurs composés de la formule I et un ou plusieurs composés de la formule IVa et/ou IVb comme défini dans la revendication 1 sont mélangés avec un ou plusieurs composés selon une ou plusieurs des revendications 3 à 7 ou avec d'autres composés cristallins liquides et/ou d'autres additifs.
